# EUROPÄISCHE PATENTSCHRIFT

(11) **EP 2 761 251 B1**
(45) Veröffentlichungstag und Bekanntmachung des Hinweises auf die Patenterteilung: **09.05.2018**
(21) Anmeldenummer: 12766083.5
(22) Anmeldetag: 26.09.2012
(51) Int. Cl.: G01C 1/04, G01C 15/00

(54) **VERMESSUNGSSYSTEM UND VERFAHREN ZUR ABSTECKUNG EINES IN EINEM KOORDINATENSYSTEM BEKANNTEN ZIELPUNKTS**
MEASURING SYSTEM AND METHOD FOR MARKING A DESTINATION KNOWN IN A COORDINATE SYSTEM
SYSTÈME DE MESURE ET PROCÉDÉ DE JALONNEMENT D'UN POINT CIBLE CONNU DANS UN SYSTÈME DE COORDONNÉES

(30) Priorität: 27.09.2011 EP 11182875
(43) Veröffentlichungstag der Anmeldung: 06.08.2014
(73) Patentinhaber: Leica Geosystems AG, 9435 Heerbrugg (CH)
(72) Erfinder: KOTZUR, Norbert, CH-9450 Atstätten (CH); MAYER, Jürgen, CH-9443 Widnau (CH)
(74) Vertreter: Kaminski Harmann
(86) Internationale Anmeldenummer: PCT/EP2012/069009
(87) Internationale Veröffentlichungsnummer: WO 2013/045517

(56) Entgegenhaltungen:
- EP-A1- 1 293 755

## Beschreibung

Die Erfindung betrifft ein Vermessungssystem zur Absteckung eines in einem Koordinatensystem bekannten Zielpunkts, mit einer mobilen Markiereinheit und einem geodätischen Vermessungsgerät nach dem Oberbegriff des Anspruchs 1, ein erfindungsgemässes geodätisches Vermessungsgerät nach Anspruch 7 und ein erfindungsgemässes geodätisches Absteckverfahren zum Abstecken eines Zielpunkts nach Anspruch 8.

Zum Vermessen eines oder insbesondere mehrerer Zielpunkte sind seit der Antike zahlreiche geodätische Vermessungsgeräte bekannt. Als räumliche Standarddaten werden dabei Entfernung und Richtung bzw. Winkel von einem Messgerät zum zu vermessenden Zielpunkt aufgenommen sowie insbesondere die absolute Position des Messgerätes nebst eventuell vorhandenen Bezugspunkten erfasst.

Allgemein bekannte Beispiele für solche geodätische Vermessungsgeräte stellen Theodolit, Tachymeter und Totalstation, die auch als elektronischer Tachymeter oder Computer-Tachymeter bezeichnet wird, dar. Eine geodätische Messvorrichtung des Stands der Technik ist beispielsweise in der Veröffentlichungsschrift EP 1 686 350 beschrieben. Derartige Geräte verfügen über elektrosensorische Winkel- und Distanzmessfunktionen, welche eine Richtungs- und Distanzbestimmung zu einem ausgewählten Ziel erlauben. Die Winkel- bzw. Distanzgrössen werden dabei im inneren Bezugssystem des Gerätes ermittelt und müssen für eine absolute Positionsbestimmung gegebenenfalls noch mit einem äusseren Bezugssystem verknüpft werden.

In vielen geodätischen Anwendungen erfolgt eine Vermessung von Punkten, indem dort speziell ausgestaltete Zielobjekte platziert werden. Diese bestehen meist aus einem Lotstock mit einem anzielbaren Modul z.B. mit einem Reflektor zur Definition der Messtrecke bzw. des Messpunktes. Diese Zielobjekte werden mittels eines Vermessungsgeräts angezielt, eine Richtung und eine Distanz zu den Objekten bestimmt und somit eine Position der Objekte abgeleitet.

In Analogie zu dieser Punktvermessung kann ein Abstecken bzw. eine Markierung bereits koordinativ bekannter Zielpunkte bzw. von Punkten, deren Position im Vorfeld eines Markiervorgangs definiert wurde, erfolgen. Im Gegensatz zur Punktvermessung sind in diesem Fall die Position bzw. die Koordinaten der abzusteckenden Punkte bekannt und sollen markiert werden. Für einen solchen Vorgang wird üblicherweise ebenfalls ein Lotstock bzw. eine Vermessungsstange verwendet, die von einem Benutzer geführt und auf einem Zielpunkt positioniert wird. Der Benutzer kann sich hierfür auf Basis von durch das Vermessungsgerät generierten Positionsinformationen an die Zielposition des Zielpunktes herantasten, wobei der Vermessungsstab von dem Vermessungsgerät durch eine zweite Person oder durch einen dem Vermessungsgerät zugeordneten Automatismus automatisch angezielt wird. Ist der Zielpunkt erreicht, kann der Benutzer eine Markierung des Punktes vornehmen.

Moderne Vermessungsgeräte wie eine Totalstation verfügen über Mikroprozessoren zur digitalen Weiterverarbeitung und Speicherung erfasster Messdaten. Die Geräte sind in der Regel in kompakter und integrierter Bauweise hergestellt, wobei meist koaxiale Distanz- und Winkelmesselemente sowie Rechen-, Steuer- und Speichereinheiten in einem Gerät integriert sind. Abhängig von der Ausbaustufe der Totalstation sind Mittel zur Motorisierung der Zieloptik, zur reflektorlosen Streckenmessung, zur automatischen Zielsuche und -verfolgung und zur Fernsteuerung des gesamten Geräts integriert.

Aus dem Stand der Technik bekannte Totalstationen verfügen des Weiteren über eine Funkdatenschnittstelle zum Aufbau einer Funkverbindung zu externen Peripheriekomponenten wie z.B. zu einem Datenerfassungsgerät, welches insbesondere als handhaltbarer Datenlogger, Fernbedieneinheit, Feldrechner, Notebook, Kleincomputer oder PDA ausgebildet sein kann. Mittels der Datenschnittstelle ist es möglich, von der Totalstation erfasste und gespeicherte Messdaten zur externen Weiterverarbeitung auszugeben, extern erfasste Messdaten zur Speicherung und/oder Weiterverarbeitung in die Totalstation einzulesen, Fernsteuersignale zur Fernsteuerung der Totalstation oder einer weiteren externen Komponente insbesondere im mobilen Feldeinsatz ein- bzw. auszugeben und Steuerungs-Software in die Totalstation zu überspielen.

Zum Anvisieren bzw. Anzielen des zu vermessenden Zielpunkts weisen gattungsgemässe geodätische Vermessungsgeräte beispielsweise ein Zielfernrohr, wie z.B. ein optisches Teleskop, als Visiereinrichtung auf. Das Zielfernrohr ist im Allgemeinen um eine vertikale Stehachse und um eine horizontale Kippachse relativ zu einer Basis des Messgeräts drehbar, sodass das Fernrohr durch Schwenken und Kippen auf den zu vermessenden Punkt ausgerichtet werden kann. Moderne Geräte können additiv zum optischen Sichtkanal eine in das Zielfernrohr integrierte und beispielsweise koaxial oder parallel ausgerichtete Kamera zur Erfassung eines Bildes aufweisen, wobei das erfasste Bild insbesondere als Live-Bild auf dem Display der Anzeige-Steuereinheit und/oder auf einem Display des zur Fernsteuerung verwendeten Peripheriegeräts - wie z.B. des Datenloggers oder der Fernbedieneinheit - dargestellt werden kann. Die Optik der Visiereinrichtung kann dabei einen manuellen Fokus - beispielsweise eine Stellschraube zur Veränderung der Position einer Fokussieroptik - aufweisen, über einen Autofokus verfügen, wobei das Verändern der Fokusposition z.B. durch Servomotoren erfolgt, oder eine fixe Fokussierung in Verbindung mit einem Weitwinkelobjektiv aufweisen. Automatische Fokussiereinrichtungen für Zielfernrohre geodätischer Geräte sind z.B. aus der DE 197 107 22, der DE 199 267 06 oder der DE 199 495 80 bekannt.

Die EP 1 734 336 offenbart ein Vermessungssystem mit einer Zieleinheit, die einen Reflektor sowie einen optischen Empfänger und Sender aufweist. Dabei wird vorgeschlagen, den optischen Sender der Zieleinheit unter anderem zur Unterstützung des automatischen Ziel-Suchprozesses zu verwenden. So kann das Zielobjekt nach dem Empfang der Such- oder Messstrahlung die eigene Identifikation, wie beispielsweise die Reflektornummer oder der Reflektortyp, anhand des Senders der Zieleinheit zurück zur Vermessungsstation übermitteln. Die Vermessungsstation kann damit das gesuchte Zielobjekt identifizieren und sich optimal bezüglich des Zielobjekts konfigurieren.

Den vorgenannten Vermessungssystemen aus dem Stand der Technik ist gemeinsam, dass, gegebenenfalls auch unter Verwendung einer Kamera, die Zieleinheit bzw. ein mit der Zieleinheit versehener Vermessungsstab von einer stationären Positionsbestimmungseinheit wie beispielsweise einer Totalstation anvisiert oder beobachtet wird. Es wird jedoch keine automatisierte Führung eines Operators, unter Verwendung der von der stationären Positionsbestimmungseinheit aufgenommenen Bilddaten, zu einem vorgesehenen Zielpunkt zwecks dessen Absteckung offenbart, so dass der Absteckungsprozess für einen Operator relativ mühsam und mit einem erheblichen Zeitaufwand verbunden ist, wenn eine genaue Absteckung des Zielpunkts gewährleistet werden soll.

Für eine Lösung dieses Problems wird in der US 7 222 021 bzw. der korrespondierenden EP 1 293 755 ein Vermessungssystem, in dieser Patentschrift bezeichnet als ein Bedienerleitsystem, vorgeschlagen, mit einer stationären Basisstation entsprechend einer stationären Positionsbestimmungseinheit, welche ausgestattet ist mit Abbildungsmitteln wie z.B. einer Kamera, und einer mobilen Station mit der Funktion einer mobilen Zieleinheit, welche ausgestattet ist mit Anzeigemitteln wie z.B. einem Display zum Darstellen einer aktuellen Position des Benutzers basierend auf gespeicherten Landschaftsbildern bzw. -daten und aktuellen Bildern, von der stationären Messeinheit aus gesehen. Es wird des Weiteren offenbart, wie ein Bediener mittels Korrelation zwischen den aktuell von der stationären Messstation aus gemessenen Positionsdaten für die mobile Station und gespeicherten Daten der vorgesehenen Position des Zielpunkts durch Markierung auf dem Display der Zieleinheit zum Zielpunkt geleitet werden kann. Hierfür kann unterstützend ein Kamerabild herangezogen werden, wobei das Führen des Benutzers z.B. durch eine Richtungs- und Distanzanzeige mittels eines Pfeils auf dem Display erfolgen kann.

Zwar kann mit diesem in der US 7 222 021 bzw. in der korrespondierenden EP 1 293 755 beschriebenen System der Prozess einer Absteckung eines Zielpunkts beschleunigt werden. Aus der Offenbarung lassen sich jedoch keine Möglichkeiten zur Verbesserung der Genauigkeit der Absteckung des Zielpunkts ableiten. Reale Bilder werden nur mittels der von der mobilen Station entfernten stationären Totalstation erfasst, während zum Führen der mobilen Station, wie z.B. eines Lotstabs mit Reflektor, lediglich synthetische, berechnete Darstellungen aus der Vogelperspektive auf einem mobilen Display verwendet werden.

Nachteilig ist demnach, dass eine Führung des Bedieners mit Lotstock nicht uneingeschränkt auf Basis einer realen Darstellung des Geländes erfolgen kann. Insbesondere ist dies der Fall bei einer relativ grossen Distanz zwischen Totalstation und Zielpunkt und einer gleichzeitigen relativ kleinen Entfernung zwischen dem Lotstock und dem Zielpunkt. Die Führung mittels eines im Bild dargestellten Pfeils ist dabei erschwert oder unmöglich - aufgrund einer konstanten Kameraperspektive bzw. da beim Anzielen des Reflektors des Lotstocks die Kamera ebenfalls auf diesen ausgerichtet ist und damit das Gelände aus einer Perspektive erfasst wird, welche eine gleichzeitige Darstellung des Pfeils von Lotstockposition zu Zielpunktposition im Bild nicht bzw. nur eingeschränkt zulässt. Ferner kann durch die Anzeige des Pfeils im Display - je nach Führungsrichtung - ein Teil des Kamerabildes derart verdeckt werden, dass beispielsweise Hindernisse in unmittelbarer Umgebung des Benutzers oder weitere zu vermessende Zielpunkte verdeckt sind.

Aufgabe der vorliegenden Erfindung ist es daher, ein Vermessungssystem und zugehörige Einheiten für das Vermessungssystem sowie ein entsprechendes Vermessungsverfahren bereitzustellen, mit welchen ein Markier- bzw. Absteckvorgang von Zielpunkten schneller, genauer, benutzerfreundlicher und robuster ausführbar ist. Eine spezielle Aufgabe der Erfindung ist es, einen Benutzer derart zu einem Zielpunkt zu führen, dass diesem fortlaufend während des Führungsvorgangs bis zum Erreichen des Zielpunkts Informationen zur Wahl einer vorteilhaften Bewegungsrichtung bereitgestellt werden, insbesondere Distanz und Richtung zum nächsten Zielpunkt, wobei mittels der Information der Zielpunkt hochpräzise erreicht und abgesteckt werden kann.

Diese Aufgaben werden durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen zu entnehmen.

Zur Orientierung in einem Gelände können einem Benutzer eines Vermessungssystems häufig unterschiedliche Repräsentationen des Geländes auf einem Display angeboten werden. Zur Führung des Benutzers hin zu einem Zielpunkt können beispielsweise eine grafische, synthetische, berechnete Darstellungen oder real - z.B. mittels Kamera - erfasste Bilder des Geländes auf einem Display bereitgestellt werden. Der Benutzer kann somit zwischen der synthetischen Kartenansicht oder dem realen Kamerabild wählen oder sich beide Darstellungen gleichzeitig anzeigen lassen. In der jeweils darstellbaren Ansicht können zudem die abzusteckenden Zielpunkte angezeigt und dem Benutzer so eine Orientierungs- bzw. Führungshilfe angeboten werden.

Eine Darstellung des Geländes, insbesondere mit einem Zielpunkt, kann bei einer aktuellen Positionierung eines Vermessungsstabs nahe dem Zielpunkt gegenüber einer Kartenansicht eine höhere Genauigkeit hinsichtlich des Erreichens der gewünschten Zielpunktposition bieten. Ausserdem können in dem Kamerabild allfällige Hindernisse oder Geländeformationen erkennbar sein, die dem Benutzer in einer Kartenansicht nur bedingt angezeigt werden können.

Für eine Anzeige zur Führung des Benutzers hin zum nächsten Zielpunkt können beispielsweise sowohl die aktuelle Position des Benutzers bzw. eines mobilen Vermessungsstabs, der vom Benutzer geführt wird, als auch die Position des nächsten oder mehrerer Zielpunkte grafisch im Kamerabild angezeigt werden. Ein Aspekt der Erfindung betrifft z.B. bei Ausrichtung der Kamera auf den Vermessungsstab - im Falle, dass der nächste Zielpunkt nicht im Blickfeld der Kamera liegt und somit nicht im Bild abgebildet werden kann - eine auf dem Bild dargestellte Markierung, die angibt in welcher Richtung bezüglich des Sichtfelds der Kamera der nächste Punkt liegt.

Ist eine Distanz zwischen der Position des Vermessungsstabs und der Position des nächsten Zielpunkts derart klein, dass sowohl der Vermessungsstab als auch der Zielpunkt sich gleichzeitig im Sichtfeld der Kamera befinden, kann eine durch den Vermessungsstab definierte Markiereinheitsposition und die Zielpunktposition im Bild referenziert und dargestellt werden.

Eine Positionsinformation hinsichtlich der geodätischen Position der Zielpunkte ist beispielsweise in einer Datenbank des Vermessungssystems gespeichert. Hiefür kann ein Benutzer die abzusteckenden Punkte z.B. auf einem Bürorechner definierten und an das Vermessungssystem übertragen, insbesondere kabelgebunden, mittels Bluetooth-, Infrarot- oder Funkübertragungstechnik. Die Punkte können dabei einzeln manuell koordinativ angegeben werden, können zusammen mit einem digitalen Geländemodell bereitgestellt werden und/oder können sowohl als Information aus einem Geländemodell als auch manuell eingespeichert werden. Zudem kann der Benutzer Zielpunktinformation direkt in das Vermessungssystem eingeben und beispielsweise während des Mess- bzw. Absteckvorgangs zusätzliche Zielpunkte definieren.

Zur Ausführung des Absteckvorgangs kann das Vermessungsgerät des Vermessungssystems mittels eines Einmessvorgangs in ein Gelände eingemessen werden, d.h. das Vermessungsgerät kann an einem Aufstellpunkt aufgestellt werden und koordinativ bekannte Punkte können in dem Gelände angezielt und hinsichtlich Winkel und Distanz vermessen werden. Aus einer je nach Messaufgabe vermessenen Anzahl bekannter Punkte können so die Position und die Ausrichtung des Vermessungsgeräts geodätisch genau bestimmt und weitere Messungen ausgehend von dem eingemessenen Vermessungsgerät präzise durchgeführt werden.

Für eine Steuerung des Vermessungssystems, insbesondere für die Ausrichtung einer Totalstation, kann eine tragbare Fernbedieneinheit vorgesehen sein, die beispielsweise am Vermessungsstab modular lösbar befestigt werden kann. Damit kann einem Bediener des Systems die Möglichkeit gegeben sein, eine Ein-Mann-Vermessung durchzuführen, d.h. der gesamte Absteckvorgang kann von einer Person ausgeführt werden, indem z.B. an der Fernbedieneinheit ein Display angeordnet ist und auf dem Display das Kamerabild mit den Positionen von Vermessungsstab und Zielpunkt angezeigt wird. Hierfür können von Vermessungsgerät erfasste Daten, insbesondere mittels Funk, an die Fernbedieneinheit übertragen und dort verarbeitet werden. Mittels der Fernbedienung kann der Bediener zudem Steuerbefehle an das Vermessungsgerät senden und beispielsweise Winkel- und Distanzmessungen zum Vermessungsstab durchführen und damit eine präzise geodätische Position des Stabes bestimmen. Ferner kann eine Positionsbestimmung des Vermessungsstabes vermittels einer an dem Stab angeordneten GNSS-Antenne erfolgen, wobei von Satelliten ausgesendete Positionsinformationen empfangen werden und aus der Information eine aktuelle Position der Antenne bzw. des Stabes abgeleitet wird.

Eine unterstützende Führung eines Benutzers zu einem nächsten Zielpunkt kann mittels des an der Fernbedieneinheit oder der Vermessungseinheit vorgesehenen Displays erfolgen. Dabei kann auf dem Display eine Differenz zwischen der aktuellen Position des Vermessungsstabs bzw. der Markiereinheit und der (nächsten) Zielpunktposition dargestellt werden, sodass beispielsweise ein Bediener des Vermessungssystems eine Information darüber bereitgestellt bekommt, auf welchem Wege die Zielpunktposition, insbesondere hinsichtlich einer optimalen Fortbewegung des Bedieners, erreicht werden kann.

Erfindungsgemäss werden hierfür mindestens zwei Anzeigen in dem Kamerabild bzw. auf dem Display dargestellt, welche jeweils in einer definierten Richtung, insbesondere ausgehend von der aktuellen Position des Vermessungsstange relativ zum Vermessungsgerät, ein Ausmass für eine Entfernung zum Zielpunkt angeben. Die Angabe kann dabei grafisch derart gestaltet sein, dass beispielsweise ein Balken dargestellt ist, der die Entfernung in eine x-Richtung repräsentiert und dabei je nach Abstand zum Zielpunkt farblich gestaltet ist, z.B. rot bei einer grossen Entfernung und grün bei einer nur noch kleinen verbleibenden Entfernung zum Zielpunkt, und/oder in Abhängigkeit von der Entfernung dimensioniert bzw. zu einem bestimmten Teil - farblich - gefüllt ist. Die zweite Anzeige, insbesondere wiederum als Balken dargestellt, spiegelt zudem eine Distanz zwischen dem Zielpunkt und der aktuellen Markiereinheitsposition in eine zweite Richtung, z.B. y-Richtung, wider. Analog zur ersten Anzeige kann die Darstellung der Distanz mittels einer Grösse der Anzeige oder durch eine farbliche Indikation erfolgen. Die erfindungsgemässe Visualisierung der Entfernungsdifferenzen zwischen einer aktuellen Istposition eines Benutzer (Markiereinheitsposition) und einem nächsten Zielpunkt kann sowohl im Rahmen eines polaren Absteckens, eines kartesischen Absteckens als auch eines Absteckens mittels weiterer Bezugspunkte (z.B. Sonne, zuletzt abgesteckter Punkt oder eine nördliche Ausrichtung des Vermessungsgeräts) erfolgen.

Ferner sind für die Indikatoren bzw. die Anzeigen für eine räumliche Abweichung je nach Entfernung von der aktuellen Markiereinheitsposition des Vermessungsstabs zur Zielpunktposition unterschiedliche Skalierungen der Entfernungswidergabe wählbar. Beispielsweise kann der nächste Zielpunkt von der Markiereinheitsposition ca. 100 Meter entfernt sein, wobei die Abweichungsanzeige (Indikator) derart dargestellt wird, dass diese Entfernung als nahezu maximaler Ausschlag des Balkens bzw. als rötliche Einfärbung repräsentiert wird. Nähert sich der Benutzer mit dem Vermessungsstab dem Zielpunkt nun bis auf weniger als fünf Meter kann die Skalierung der Darstellung der Entfernung zwischen den Positionen so angepasst werden, dass z.B. ein maximaler Ausschlag des Indikators bzw. der Darstellung der Distanz eine Entfernung von mindestens fünf Metern anzeigt und damit eine sensitivere Abstufung für eine Annäherung an den Zielpunkt angeboten wird. Befindet sich der Vermesser mit dem Vermessungsstab innerhalb eines fünf Meter Radius um den Zielpunkt kann er mittels dieser sensitiveren Skaleneinstellung wesentlich genauer in Richtung des Zielpunkts geleitet werden. Nähert sich der Vermesser nun noch weiter an, beispielsweise bis auf weniger als 50 cm, kann die Skalierung wiederum derart grob werden, dass anhand des Abweichungsanzeige nur mehr schwer ersichtlich ist ob eine weitere Annäherung stattfindet, beispielsweise auf 40 cm oder 30 cm. In dieser Situation kann ein weiteres Umschalten der Skalierung erfolgen und z.B. ein Vollausschlag des Indikatorbalkens eine verbleibende Entfernung von zumindest 50 cm zum Zielpunkt anzeigen. Das Umschalten bzw. der Übergang zwischen den Skalierungen kann ebenfalls bei einer zunehmenden Entfernung zum Zielpunkt erfolgen, wobei die Sensitivität der Anzeige abnehmen kann. Zudem kann das Umschalten automatisch, insbesondere auf Basis fortlaufender Abstandsbestimmung und Anpassung der Skalierung, erfolgen oder manuelle vom Benutzer des Vermessungssystems vorgenommen werden.

Die Erfindung betrifft demnach ein Vermessungssystem zur Absteckung eines in einem Koordinatensystem bekannten Zielpunkts mit einer mobilen Markiereinheit und einem geodätischen Vermessungsgerät, insbesondere zur Positionsbestimmung der Markiereinheit. Dabei ist die Markiereinheit derart ausgebildet, dass eine Markiereinheitsposition der Markiereinheit hochpräzise bestimmbar ist, insbesondere wobei die Markiereinheit einen anmessbaren Reflektor und/oder eine GNSS-Antenne zur Bestimmung der Markiereinheitsposition aufweist. Zudem weist das Vermessungsgerät zumindest eine eine Anzielrichtung definierende Anzieleinheit, insbesondere Fernrohr, eine Winkelmessfunktionalität, und eine Kamera zur Erfassung eines Kamerabilds auf. Ausserdem liegen eine in einer Datenbank gespeicherten Zielpunktposition des Zielpunkts und eine Ausgabeeinheit, insbesondere ein Display, auf der das Kamerabild, insbesondere zusammen mit der Zielpunktposition und/oder der Markiereinheitsposition, darstellbar ist vor. Des Weiteren verfügt das Vermessungssystem über eine Steuerungs- und Verarbeitungseinheit. Das Vermessungssystem weist eine Darstellungsfunktionalität auf, in deren Rahmen bei Ausführung der Darstellungsfunktionalität gesteuert durch die Steuerungs- und Verarbeitungseinheit eine räumliche Abweichung zwischen der Markiereinheitsposition und der Zielpunktposition grafisch auf der Ausgabeeinheit dargestellt wird. Die Abweichung wird in eine erste Richtung mittels einer ersten Abweichungsanzeige, wobei die erste Abweichungsanzeige einen Abstand der Zielpunktposition zu einer durch das Vermessungsgerät und die Markiereinheit definierten Ebene indiziert, und in eine zweite Richtung mittels einer zweiten Abweichungsanzeige, wobei die zweite Abweichungsanzeige einen Abstand der Zielpunktposition zu einer durch die Markiereinheitsposition festgelegten Normalen zur Ebene indiziert, dargestellt. Dabei wird die Abweichung in die erste Richtung unabhängig von der Abweichung in die zweite Richtung dargestellt.

Im Zusammenhang mit vorliegender Erfindung ist die Darstellung der räumlichen Abweichung in die erste Richtung durch die erste Abweichungsanzeige derart aufzufassen, dass der Abstand der Zielpunktposition zu der Ebene hierdurch nur genau bezüglich dieser ersten Richtung angegeben wird, d.h. die Abweichungsanzeige repräsentiert eine Entfernung in nur diese Richtung, wobei der Abstand der kürzesten Verbindung zwischen der Ebene und der Zielpunktposition entspricht. Analoges gilt für das Darstellen des Abstandes in die zweite Richtung, orthogonal zur ersten Richtung, wobei durch die zweite Abweichungsanzeige der Abstand hier ebenfalls als nur in diese zweite Richtung (und zwar ausschliesslich in dieser zweiten Richtung) repräsentiert zu verstehen ist. Die Anzeigen beziehen sich somit auf den tatsächlich vorliegenden (absoluten) Abstand jeweils in nur eine der definierten Richtungen.

Hierfür basiert die Darstellung der Abweichungsanzeige vorzugsweise auf einer entsprechenden Funktion, wobei diese derart ausgestaltet ist, dass zur jeweiligen Anzeige des Abstands für die erste Richtung im Rahmen der Ausführung der Funktion nur die Abstandskomponente für diese erste Richtung (kürzeste Entfernung zwischen der Zielpunktposition und der durch das Vermessungsgerät und die Markiereinheit definierten Ebene) herangezogen wird und der Abstand basierend nur auf dieser Komponente für nur diese erste Richtung indiziert wird. Es wird also durch die Funktion beispielsweise nur die X-Komponente eines Abstands verarbeitet und der so ermittelte Abstand (nur) in X-Richtung mittels der Abweichungsanzeige indiziert bzw. symbolisiert. Für die Darstellung des Abstandes in eine Y-Richtung wird analog nur die Y-Komponente des Abstands verarbeitet und der Abstand in Y-Richtung indiziert.

Erfindungsgemäss kann somit aus einem Zusammenwirken der Markiereinheit, beispielsweise eines Vermessungsstabs mit einem Reflektor, und einem Vermessungsgerät, z.B. einer Totalstation, die Position der Markiereinheit, insbesondere durch Anzielen des Reflektors mit einer seitens der Anzieleinheit des Vermessungsgeräts emittierten Laserstrahlung, bestimmt werden. Eine Distanzmessung kann hierbei nach dem Prinzip der Laufzeitmessung oder Phasenmessung, insbesondere anhand von Laufzeitdifferenz und/oder Phasendifferenz, erfolgen. Die Winkelmessung wird mittels entsprechender Winkelmesssensoren durchgeführt. In einem Datenspeicher des Vermessungssystems sind Zielpunktinformationen hinterlegt, insbesondere Koordinaten von Zielpunkten, die abgesteckt bzw. markiert werden sollen. Unter Berücksichtigung von der Markiereinheitsposition und den Zielpunktpositionen kann ein Vergleich dieser Positionen stattfinden, wobei zur Markierung des Zielpunkts im Wesentlichen eine Positionsübereinstimmung zwischen Markiereinheitsposition und der Position des nächsten abzusteckenden Zielpunkts festzustellen ist. Hierzu muss die mobile Markiereinheit solange an die Zielpunktposition angenähert werden, bis diese Position bzw. ein um die Zielpunktposition definierter Toleranzbereich erreicht ist.

Zu einer fortlaufenden Feststellung der Markiereinheitsposition kann das Vermessungsgerät eine automatische Zielverfolgungs-Funktion für als Ziel-Reflektor dienende Prismen z.B. an Vermessungsstäben (ATR: "Automatic Target Recognition") aufweisen. Dafür können separate ATR-Lichtquelle - z.B. ein Multimodefaserausgang, der optische Strahlung mit einer Wellenlänge im Bereich von 850 nm emittiert - und ein spezieller, für diese Wellenlänge sensitiver ATR-Detektor (z.B. CCD-Flächensensor) zusätzlich in der Anzieleinheit integriert sein.

Im Rahmen der ATR-Feinanzielfunktion wird dabei in Richtung der Anzielrichtung ein ATR-Messstrahl emittiert, dieser wird am Prisma retro-reflektiert und der reflektierte Strahl vom ATR-Sensor erfasst. Je nach Abweichung der Ausrichtung der Anzielrichtung vom Prisma weicht dabei auch die Auftreffposition der reflektierten Strahlung auf dem ATR-Sensor von einer zentralen Sensorflächenposition ab (d.h. der Reflexfleck des am Prisma retro-reflektierten ATR-Messstrahls auf dem ATR-Flächensensor liegt nicht im Zentrum des ATR-Flächensensors und trifft somit nicht auf einer Soll-Position auf, die z.B. anhand Kalibrierung als jene mit der optischen Zielachse korrespondierende Position festgelegt wurde).

Ist dies der Fall, so kann motorisiert die Ausrichtung der Visiereinrichtung derart geringfügig nachgestellt, dass der am Prisma retro-reflektierte ATR-Messstrahl hochpräzise im Zentrum der Sensorfläche auf dem ATR-Flächensensor auftrifft (d.h. die Horizontal- und Vertikalwinkel der Visiereinrichtung werden derart iterativ geändert und angepasst, bis das Zentrum des Reflexflecks mit der Soll-Position auf dem ATR-Flächensensor zusammenfällt). Alternativ kann eine Rest-Abweichung zwischen Auftreffpunkt des retro-reflektierten ATR-Messstrahls auf dem ATR-Flächensensor und dem Zentrum der Sensorfläche auch rechnerisch berücksichtigt und in einen Winkel umgewandelt werden, der zu dem - anhand der Winkelsensoren erfassten - Raumwinkel, in den eine Zielachse der Anzieleinheit zeigt, entsprechend addiert wird. D.h., der Raum-Winkel zum einem Anzielpunkt kann in diesem Fall auch abgeleitet werden aus dem - anhand der Winkelsensoren erfassten - Raumwinkel der Zielachse und einer Ablage des detektierten ATR-Messstrahl-Reflexes vom Sensorzentrum (d.h. von jenem zentralen Punkt auf dem ATR-Sensor, an dem die Zielachse abgebildet wird). Dadurch kann die erzielbare Genauigkeit bei der Ausrichtung der Anzielrichtung auf ein Prisma gegenüber einer manuell erfolgenden Anzielung mit Fadenkreuz und basierend auf blossem Augenmass deutlich erhöht werden.

Mit der Kamera des Vermessungsgeräts wird ferner ein Kamerabild erfasst, wobei dieses Bild im Wesentlichen in Anzielrichtung und damit üblicherweise in Richtung des Vermessungsstabs erfasst wird, da die Anzieleinheit zur Positionsbestimmung der Markiereinheit auf den Reflektor des Vermessungsstabs ausgerichtet ist. Die Kamera ist hierfür im Wesentlichen in Anzielrichtung ausgerichtet, d.h. die Kamera ist derart ausgerichtet, dass ein Bild so erfasst werden kann, dass ein mit der Anzieleinheit angezieltes Objekt im Bild erfasst werden kann. Insbesondere ist eine Erfassungsrichtung der Kamera hierfür koaxial oder mit einem geringen Versatz parallel zur Anzielrichtung ausgerichtet. Die Richtung der Bilderfassung kann ebenfalls mit den Winkelmesssensoren bestimmt werden. In dem erfassten Bild des Geländes in Richtung der Markiereinheit können nun die Positionen allfälliger Zielpunkte - sofern die Punkte im Sichtbereich der Kamera liegen - und der Markiereinheitsposition referenziert werden bzw. deren Koordinaten derartig transformiert werden, dass diese im Kamerabild mit einer korrekten Positionierung darstellbar sind. Die Darstellung des Kamerabilds erfolgt auf einer Ausgabeeinheit, beispielsweise einem Display, insbesondere berührungssensitiven Display, wobei die Ausgabeeinheit z.B. im Vermessungsgerät oder in einer Fernbedienung für das System angeordnet sein kann.

Bei Ausführung der Darstellungsfunktionalität - durch das Vermessungssystem - werden im Kamerabild bzw. auf der Ausgabeeinheit grafische Objekte (Abweichungsanzeigen) erzeugt, die zur Anzeige einer Entfernung zwischen Markiereinheitsposition und Zielpunktposition dienen. Dabei indizieren die Objekte jeweils die Entfernung in einer definierten Richtung zum Zielpunkt. Diese Darstellung kann z.B. mittels Balken oder mittels einander benachbarter Segmente, die je nach Entfernung in Gestalt und/oder Farbe angepasst werden können, erfolgen. Beispielsweise kann die farbliche Gestaltung der Abweichungsanzeigen analog zu den Signalfarben einer Ampelanlage - rot, gelb, grün - erfolgen, wobei rot für einen grossen und grün für einen kleinen Abstand zwischen Markiereinheitsposition und Zielpunktposition stehen kann. Insbesondere kann die Länge eines Balkens oder die Anzahl von leuchtend erscheinenden Segmenten bzw. virtuellen LEDs die Distanz zwischen den Positionen darstellen, wobei ein kürzerer Balken für eine kleinere Distanz oder viele leuchtende Segmente für eine grössere Distanz stehen können. Die Länge des Balkens kann somit eine Distanz repräsentieren, die durch einen Distanzwert indiziert ist. Dieses Verhältnis von Balkenlänge - bzw. von der Gestaltung der Abweichungsanzeige allgemein - zu Distanzwert kann abhängig von der festgestellten Distanz, insbesondere automatisch, verändert werden und somit kann eine Umskalierung der Abweichungsanzeige erfolgen.

Die räumliche Abweichung zwischen der Markiereinheitsposition und der Zielpunktposition wird in einer ersten Richtung durch einen Abstand des Zielpunkts zu einer Verbindungslinie von Vermessungsgerät zu Markiereinheit angezeigt. Durch die jeweilige Position des Vermessungsgeräts und der Markiereinheit wird eine erste Ebene definiert werden zu der dieser Abstand bestimmt wird. In die zweite Richtung, insbesondere eine senkrechte Richtung zur Ersten, wird zudem der Abstand indiziert, der von der Zielpunktposition zu einer Normalen oder einer senkrechten zweiten Ebene zur ersten Ebene besteht.

Insbesondere kann erfindungsgemäss eine Skalierung der Darstellung der ersten und der zweiten Abweichungsanzeige jeweils zwischen mindestens zwei Skalierungen umschaltbar sein, insbesondere unabhängig voneinander. Mittels einer derartigen Skalierungsoption kann eine deutlich gesteigerte Benutzerfreundlichkeit für das Vermessungssystem erreicht werden. Je nach Abstand zwischen der Markiereinheit und dem nächsten Zielpunkt kann eine Sensitivität der Abweichungsanzeige derart eingestellt werden, dass nach Bedarf eine relativ kleine oder gegebenenfalls grössere Annäherung bzw. eine Entfernung der Markiereinheit von der Zielpunktposition an einer Veränderung der Anzeige abgelesen werden kann.

Ferner kann erfindungsgemäss die Skalierung manuell oder automatisch in Abhängigkeit von der räumlichen Abweichung einstellbar sein. So kann ein Bediener des Vermessungssystems, der sich mit dem Vermessungsstab in ca. 100 Metern Entfernung in eine Richtung (x- oder y-Richtung) vom Zielpunkt befindet, beispielsweise bei der Auswahl einer gewünschten Skalierung solange von sensitiven Skalenbereichen, z.B. von einem Bereich dessen maximale Entfernungsrepräsentation eine Distanz von 0,1 Meter widerspiegelt, in gröbere Skalierungen wechseln, bis eine Entfernung von 100 Metern nicht länger durch einen Maximalausschlag eines Anzeigebalkens angezeigt wird. Ausserdem kann die Skalierung automatisch vom System umgestellt werden, sodass diese fortlaufend oder in Schritten hinsichtlich einer optimalen Distanzanzeige angepasst wird. Insbesondere kann die Skalierung in Abhängigkeit von einer Distanz zwischen der Zielpunktposition und der Markiereinheitsposition relativ zu einem basierend auf der Zielpunktposition definierten Distanzschwellwert und/oder in Abhängigkeit von einer Einordnung der Distanz in definierte Entfernungszonen um die Zielpunktposition eingestellt werden, insbesondere wobei in Abhängigkeit von der räumlichen Abweichung automatisch eine Skalierungsempfehlung bereitgestellt werden kann. Damit können Entscheidungskriterien definiert sein auf deren Basis ein Umschalten zwischen unterschiedlichen Skalierungen erfolgen kann. Z.B. kann bei einem Unterschreiten einer um den Zielpunkt - insbesondere kreisförmig - definierten Grenzlinie, die den Schwellwert repräsentiert, eine automatische Umskalierung der ersten und/oder der zweiten Abweichungsanzeige erfolgen, wobei beispielsweise ein nächst sensitiverer Bereich in einer benachbarten Grössenordung eingestellt wird. Des Weiteren kann bei einem Verlassen einer Entfernungszone und einem Eintreten in eine andere Zone mit der Markiereinheit ebenfalls ein manuelles oder automatisches Umschalten der Skalierung erfolgen. Für das manuelle Umschalten kann, insbesondere dem mit dem System arbeitenden Vermesser, eine Information bzw. eine Empfehlung visuell oder akustisch angezeigt werden, in einen Skalenbereich zu wechseln, welcher eine besser geeignete Darstellung der Entfernung bereitstellt.

Für die unterschiedlichen Skalierungen können Stufen vorgesehen sein, wobei eine Änderung der Skalierung mit einer Änderung des Grössenordnungsbereichs der Skalierung verknüpft sein kann. Wechselt dabei die Skalierung in die nächst feinere Skalierungsstufe, so kann eine 10-fach feinere Unterteilung der Darstellung der Abweichungsanzeige und ein um den Faktor 10 reduzierter maximal sinnvoll indizierbarer Entfernungswert eingestellt sein. Die Skalierung kann so erfindungsgemäss in mindestens drei Grössenordungen einstellbar sein, insbesondere wobei für die erste und/oder die zweite Abweichungsanzeige maximale räumliche Abweichungen in Grössenordungen von 10⁻³ Meter bis 10⁺³ Meter einstellbar sind. Mittels dieser Anzeigemöglichkeiten kann, insbesondere manuell, schnell zwischen gewünschten oder benötigten Sensitivitäten ausgewählt werden.

Erfindungsgemäss kann die Skalierung für die erste Abweichungsanzeige und für die zweite Abweichungsanzeige gemeinsam oder separat einstellbar sein. Die separate Skalierung bietet den weiteren Vorteil der Erfindung, dass der Benutzer beispielsweise in einem ersten Schritt eine möglichst gute Annäherung in die erste der beiden angezeigten Richtungen unternehmen kann und dabei die Skalierung für die zweite Richtung derart grob bleibt, dass auch bei einer relativ zur ersten Richtung grossen Entfernung zum Zielpunkt Veränderungen der Entfernung geeignet darstellbar bleiben. Ferner können so Entfernungszonen - z.B. um ein automatisches Umschalten von Skalierungen zu definieren - um den Zielpunkt herum definiert werden, welche z.B. in die erste Richtung unterschiedlich zur zweiten Richtung dimensioniert sein können, beispielsweise elliptisch oder rechteckig, und somit z.B. bestimmten Geländegegebenheiten oder unterschiedlichen Entfernungen in beiden Richtungen angepasst sein können.

Zumindest eine der Abweichungsanzeigen kann gemäss einer speziellen Ausführungsform der Erfindung durch eine Symbolik zur Darstellung des jeweiligen Abstands in die jeweilige Richtung verkörpert sein, sodass der zu indizierende Abstand durch die Symbolik in die jeweilige Richtung grafische symbolisiert werden kann. Eine solche Symbolik kann beispielsweise durch eine grafische Repräsentation des Abstands verkörpert sein. Ferner können für die Darstellung der Symbolik unterschiedliche Entfernungsbereiche definiert sein, wobei in Abhängigkeit von der aktuell vorliegenden Entfernung zum Zielpunkt eine entsprechende Symbolik angezeigt bzw. diese aktualisiert wird. Die Symbolik kann somit auch skalierbar ausgeführt sein, d.h. dass innerhalb der unterschiedlichen Skalen eine identische Symbolik oder ein identisches Symbol jeweils für unterschiedliche Entfernungen stehen kann (sodass also je nach der aktuell zur Anwendung kommenden Skala, die jeweils einen entsprechenden Entfernungsbereich abdeckt, eine spezielle Symbolik eine innerhalb des durch die jeweilige Skala abgedeckten Entfernungsbereichs liegende Entfernung indiziert) .

Insbesondere kann erfindungsgemäss zumindest eine Abweichungsanzeige als Balken, insbesondere segmentierter Balken, ausgebildet sein und/oder zumindest eine Abweichungsanzeige Symbole aufweisen, wobei ein Referenzsymbol die Zielpunktposition und ein Positionssymbol die Markiereinheitsposition indiziert, und/oder es kann zumindest eine Abweichungsanzeige eine Farbausprägung aufweisen (d.h. die Anzeige kann je nach anzuzeigender Entfernung zwischen Markiereinheitsposition und Zielpunktposition farblich dargestellt bzw. hinterlegt sein) und/oder zumindest eine Abweichungsanzeige durch virtuelle Leuchtdioden verkörpert sein. Die Gestaltung der ersten und/oder der zweiten Abweichungsanzeige kann im Rahmen der Erfindung derart definiert sein, dass durch einen prinzipiellen Formerhalt der Abweichungsanzeige bzw. der Darstellung der Distanzabweichung eine Veränderung der Distanz, z.B. eine Zunahme oder Abnahme der Entfernung zum Zielpunkt in die jeweilige Richtung, durch eine Anzeigeänderung im Rahmen der erhaltenen Form ersichtlich ist. So kann beispielsweise ein Rahmen in Form eines Balkens dargestellt sein, dessen Füllgrad eine Distanz indiziert und dessen Ausrichtung auf der Ausgabeeinheit die Richtung der Distanz angibt. Dabei kann eine Übereinstimmung von Markiereinheitsposition und Zielpunktposition beispielsweise in der Mitte der Balkenform repräsentier sein und eine Abweichung davon durch einen Ausschlag des Balkens in eine Richtung abhängig von einer Relativposition des Zielpunkts zur Markiereinheit indiziert werden. Z.B. kann der Balken im Wesentlichen horizontal auf einem Display dargestellt sein, wobei eine relative Lage des Zielpunkt zum Vermessungsstab (ausgehend von der Verbindungslinie zwischen Vermessungsgerät und Vermessungsstab) rechts von der Verbindungslinie mit einem Ausschlag der Füllung des Balkens nach rechts angezeigt wird und die Entfernung in diese Richtung (nach rechts) durch den Füllgrad des Balkens (und dessen Skalierung) indiziert wird. Ausserdem kann die Übereinstimmung von Markiereinheitsposition und Zielpunktposition an einem Ende des Balkens angezeigt sein und somit eine Repräsentation der Distanz in eine Richtung durch die Füllung des Balkens indiziert sein. Wechselt die Lage des Zielpunkt dabei z.B. auf die andere Seite der Verbindungslinie oder auf die andere Seite einer Normalen zur Verbindungslinie kann die Übereinstimmung von Markiereinheitsposition und Zielpunktposition am gegenüberliegenden Ende des Balkens angezeigt sein. Zudem kann der Balken in einzelne Abschnitte unterteilt sein und/oder die Anzeige kann mittels benachbarter virtueller LEDs erfolgen. Je nach Abstand zwischen Markiereinheitsposition und Zielpunkt können damit mittels eines Aufleuchtens, insbesondere in unterschiedlichen Farben, Entfernungen angezeigt werden, z.B. grosse Distanzen durch rotes Leuchten und kleine Distanzen durch grünes Leuchten. Neben dieser farblich kodierten Anzeige kann auch die jeweilige Anzahl aufleuchtender Segmente bzw. LEDs eine Distanz indizieren. Eine der Distanz zugeordnete Richtung kann dabei durch die Anordnung der einzelnen Segmente oder Leuchtdioden, z.B. linear nebeneinander, ausgedrückt werden.

Im Rahmen der Erfindung kann ferner die erste und/oder die zweite Abweichungsanzeige unabhängig vom Kamerabild aktualisiert werden, insbesondere unabhängig von einem Vergrösserungsfaktor und/oder einem angezeigten Bildausschnitt des Kamerabilds. Ausserdem kann zumindest eine Abweichungsanzeige, insbesondere eine farbliche und/oder dimensionale Gestaltung der Abweichungsanzeige, in Abhängigkeit der Distanz zwischen der Zielpunktposition und der Markiereinheitsposition aktualisiert werden. Durch das von dem Kamerabild unabhängige Aktualisieren der Anzeige kann der Benutzer z.B. in das mit der Kamera des Vermessungsgeräts erfasste Bild hineinzoomen oder Bildausschnitte auswählen und sich anzeigen lassen und dabei gleichzeitig die Abweichung der aktuellen Markiereinheitsposition zur Zielpunktposition dargestellt bekommen. Für die Positionsabweichung kann dabei die Indizierung der realen Distanz und Richtung zum Zielpunkt beibehalten werden, obwohl das auf der Ausgabeeinheit dargestellte Kamerabild z.B. eine Detailperspektive anbietet, in der die Markiereinheit nicht gezeigt wird und/oder deren Darstellung eine wesentlich kleiner oder grössere Distanz vermuten liesse.

Weiters kann erfindungsgemäss in der Datenbank ein digitales Geländemodell gespeichert sein und die Zielpunktposition sowie insbesondere eine Kartenansicht aus dem Geländemodell ableitbar sein. Zur Definition der abzusteckenden Zielpunkte kann demnach beispielsweise ein CAD-Modell eines Geländes herangezogen werden, in welchem koordinativ Zielpunkte definiert werden können bzw. aus welchem bereits hinterlegte Zielpunkte zur Absteckung herangezogen werden können. Auf Basis dieses Modells kann zudem eine Kartenansicht des Geländes, insbesondere mit Berücksichtigung von Zielpunktpositionen, generiert werden, welche eine Aufsicht der Messumgebung bereitstellt. Durch das Heranziehen des Geländemodells kann dem Benutzer des Vermessungssystems eine weitere Unterstützung zur Durchführung eines Absteckvorgangs bereitgestellt werden. Zudem können die Zielpunkte damit vor Messbeginn an einem Computerarbeitsplatz, z.B. im Büro des Vermessers, mittels der Orientierung am Geländemodell bzw. des Koordinatensystems des Modells definiert und im System gespeichert werden.

Insbesondere kann das Vermessungssystem erfindungsgemäss eine Fernbedienung zur Fernsteuerung des Vermessungssystems aufweisen. Damit kann z.B. eine Steuerung eines Mess- bzw. Absteckvorgangs aus der Ferne erfolgen, d.h. nicht mittels unmittelbarer Eingabe von Steuerbefehlen am Vermessungsgerät. Mittels der Fernbedienung können so beispielsweise weitere abzusteckende Zielpunkte eingegeben werden. Ferner kann in der Fernbedienung ein Display integriert sein, auf welchem sowohl das Kamerabild als auch Zielpunkte - sofern sich diese im Sichtfeld der Kamera befinden - dargestellt werden können. Im Gegensatz zu einer bekannten Zwei-Personen-Vermessung, wobei ein Vermesser den Vermessungsstab führt und ein zweiter Vermesser den Ersten zur Führung hin zum nächsten Zielpunkt mit Richtungs- und Entfernungsangaben versorgt, kann durch diese Ausführung das Abstecken der Zielpunkte von einem Benutzer, der den Vermessungsstab führt und die Fernbedienung zur Verfügung hat, allein ausgeführt werden.

Die Erfindung betrifft ausserdem ein geodätisches Vermessungsgerät, insbesondere Totalstation oder Theodolit, für das erfindungsgemässe Vermessungssystem. Das Gerät kann dabei zum einen zur Positionsbestimmung der Markiereinheit dienen und zum anderen das Kamerabild, welches zur Führung eines Vermessers herangezogen wird, erfassbar und bereitstellbar machen. Das Vermessungsgerät weist eine eine Anzielrichtung definierenden Anzieleinheit, insbesondere Fernrohr, eine Winkelmessfunktionalität, insbesondere zur Erfassung der Ausrichtung der Anzieleinheit, und eine Kamera zur Erfassung eines Kamerabildes auf. Zudem verfügt das Gerät über eine in einer Datenbank gespeicherten Zielpunktposition eines Zielpunkts, eine Ausgabeeinheit, insbesondere ein Display, auf der das Kamerabild darstellbar ist und über eine Steuerungs- und Verarbeitungseinheit. Weiters weist das Vermessungsgerät eine Darstellungsfunktionalität auf, in deren Rahmen bei Ausführung der Darstellungsfunktionalität gesteuert durch die Steuerungs- und Verarbeitungseinheit eine räumliche Abweichung zwischen einer Markiereinheitsposition einer mobilen Markiereinheit und der Zielpunktposition grafisch auf der Ausgabeeinheit dargestellt wird. Dabei wird die Abweichung in eine erste Richtung mittels einer ersten Abweichungsanzeige, wobei die erste Abweichungsanzeige einen Abstand der Zielpunktposition zu einer durch das Vermessungsgerät und die Markiereinheit definierten Ebene indiziert, und in eine zweite Richtung mittels einer zweiten Abweichungsanzeige, wobei die zweite Abweichungsanzeige einen Abstand der Zielpunktposition zu einer durch die Markiereinheitsposition festgelegten Normalen zur Ebene indiziert, dargestellt. Die Abweichung in die erste Richtung wird dabei unabhängig von der Abweichung in die zweite Richtung dargestellt.

Die seitens der Ausgabeeinheit dargestellten Abweichungsanzeigen dienen zur Indikation einer Entfernung zwischen Markiereinheitsposition und Zielpunktposition. Dabei indizieren die Anzeigen jeweils die Distanz in einer definierten Richtung zum Zielpunkt. Die Distanz wird mittels der Ausgestaltung der Abweichungsanzeigen dargestellt, wobei diese je nach ermittelter Positionsdifferenz fortlaufend aktualisiert werden kann. Die Form der Abweichungsanzeige kann ferner eine der Distanz zugehörige, definierte Richtung zur Markiereinheitsposition anzeigen.

Insbesondere kann eine Skalierung der Darstellung der ersten und der zweiten Abweichungsanzeige jeweils zwischen mindestens zwei Skalierungen umschaltbar sein, insbesondere unabhängig voneinander. Damit kann je nach Abstand zwischen der Markiereinheitsposition und der Zielpunktposition eine Sensitivität der Anzeige derart eingestellt werden, dass die Indikation des aktuellen Abstand in einem Anzeigenbereich der Abweichungsanzeige liegt und eine Veränderung des Abstands, insbesondere durch ein Hin- oder Wegbewegen der Markiereinheit relativ zum Zielpunkt, auf der Anzeige deutlich wahrnehmbar ist.

Ein weiterer Aspekt der Erfindung betrifft ein geodätisches Absteckverfahren zum Abstecken eines in einem Koordinatensystem bekannten Zielpunkts, mit einem erfindungsgemässen Vermessungssystem. Im Rahmen des Absteckverfahrens erfolgen ein Bestimmen einer Markiereinheitsposition einer mobilen Markiereinheit, ein Erfassen eines Kamerabilds mit einer Kamera eines Vermessungsgeräts, und ein Darstellen des Kamerabilds auf einer Ausgabeeinheit, insbesondere zusammen mit der Markiereinheitsposition und/oder der Zielpunktposition. Ferner wird ein räumliches Abweichen zwischen der Markiereinheitsposition und der Zielpunktposition grafisch auf der Ausgabeeinheit dargestellt. Das Abweichen wird in eine erste Richtung mittels einer ersten Abweichungsanzeige, wobei die erste Abweichungsanzeige einen Abstand der Zielpunktposition zu einer durch das Vermessungsgerät und die Markiereinheit definierten Ebene indiziert, und in eine zweite Richtung mittels einer zweiten Abweichungsanzeige, wobei die zweite Abweichungsanzeige einen Abstand der Zielpunktposition zu einer durch die Markiereinheitsposition festgelegten Normalen zur Ebene indiziert, dargestellt. Das Abweichen wird dabei in die erste Richtung unabhängig von dem Abweichen in die zweite Richtung dargestellt.

Insbesondere kann erfindungsgemäss im Rahmen des Absteckverfahrens ein Skalieren des Darstellens der ersten und der zweiten Abweichungsanzeige jeweils in einer von mindestens zwei Skalierungen erfolgen, insbesondere unabhängig voneinander.

Ferner kann das Skalieren manuell oder automatisch in Abhängigkeit des räumlichen Abweichens erfolgen, insbesondere in Abhängigkeit von einer Distanz zwischen der Zielpunktposition und der Markiereinheitsposition relativ zu einem basierend auf der Zielpunktposition definierten Distanzschwellwert und/oder in Abhängigkeit von einer Einordnung der Distanz in definierte Entfernungszonen um die Zielpunktposition, insbesondere wobei in Abhängigkeit des räumlichen Abweichens automatisch eine Skalierungsempfehlung bereitgestellt werden kann.

Weiters kann erfindungsgemäss im Rahmen des Absteckverfahrens zumindest eine Abweichungsanzeige als Balken, insbesondere segmentierter Balken, ausgebildet sein und/oder zumindest eine Abweichungsanzeige Symbole aufweisen, wobei ein Referenzsymbol die Zielpunktposition und ein Positionssymbol die Markiereinheitsposition indiziert, und/oder es kann zumindest eine Abweichungsanzeige eine Farbausprägung aufweisen (d.h. die Anzeige kann je nach anzuzeigender Entfernung zwischen Markiereinheitsposition und Zielpunktposition farblich dargestellt bzw. hinterlegt sein), und/oder zumindest eine Abweichungsanzeige durch virtuelle Leuchtdioden verkörpert sein.

Die Erfindung betrifft ausserdem ein Computerprogrammprodukt mit Programmcode, der auf einem maschinenlesbaren Träger gespeichert ist, zur Durchführung eines erfindungsgemässen Absteckverfahrens zum Abstecken eines Zielpunkts, insbesondere wenn das Programm auf einer als Steuerungs- und Verarbeitungseinheit eines erfindungsgemässen Vermessungssystem ausgebildeten elektronischen Datenverarbeitungseinheit ausgeführt wird.

Einem Benutzer eines Vermessungssystems können im Rahmen eines Absteckvorgangs unterschiedliche Darstellungen eines Geländes angeboten werden. In Abhängigkeit von der Distanz zwischen der Markiereinheitsposition und der Zielpunktposition kann beispielsweise bei relativ grosser Distanz eine synthetisch erzeugte Aufsicht auf das Messgelände (Kartenansicht), insbesondere mit einer Markierung für die Position der Markiereinheit und Markierungen der abzusteckenden oder bereits abgesteckten Zielpunkte, eine vorteilhafte Darstellung bieten. Ist hingegen die Markiereinheit relativ nahe zum Zielpunkt positioniert, so kann für eine präzise Annäherung das Kamerabild der Kartenansicht vorgezogen werden.

Ein erfindungsgemässes Vermessungssystem zur Absteckung eines in einem Koordinatensystem bekannten Zielpunkts weist eine mobilen Markiereinheit und ein geodätisches Vermessungsgerät, insbesondere zur Positionsbestimmung der Markiereinheit, auf. Die Markiereinheit ist derart ausgebildet, dass eine Markiereinheitsposition der Markiereinheit hochpräzise bestimmbar ist, insbesondere wobei die Markiereinheit einen anmessbaren Reflektor und/oder eine GNSS-Antenne zur Bestimmung der Markiereinheitsposition aufweist, und das Vermessungsgerät weist zumindest eine eine Anzielrichtung definierende Anzieleinheit, insbesondere Fernrohr, eine Winkelmessfunktionalität und eine Kamera zur Erfassung eines Kamerabilds auf. Zusätzlich verfügt das System über eine Datenbank, in der eine Zielpunktposition eines Zielpunkts und eine Kartenansicht eines den Zielpunkt aufweisenden Geländes gespeichert sind, über eine Ausgabeeinheit, insbesondere Display, auf der das Kamerabild und/oder die Kartenansicht, insbesondere in Aufsicht, darstellbar ist und über eine Steuerungs- und Verarbeitungseinheit. Weiters ist seitens des Vermessungssystems eine Anzeigefunktionalität mit einer automatischen Umschaltfunktion vorgesehen, in deren Rahmen bei Ausführung der Anzeigefunktionalität gesteuert durch die Steuerungs- und Verarbeitungseinheit in Abhängigkeit eines Erfüllens eines definierten Anzeigekriteriums, insbesondere in Abhängigkeit eines Positionsverhältnis zwischen der Zielpunktposition und der Markiereinheitsposition, das Kamerabild oder die Kartenansicht auf einer Ausgabeeinheit angezeigt wird. Zudem erfolgt ein Umschalten zwischen dem Kamerabild und der Kartenansicht automatisch, insbesondere unter Berücksichtigung eines Distanz- und/oder Winkelschwellwerts, insbesondere wobei das Kamerabild und/oder die Kartenansicht zusammen mit der Markiereinheitsposition und/oder der Zielpunktposition angezeigt werden.

Ein erfindungsgemässes geodätisches Vermessungsgerät, insbesondere Totalstation oder Theodolit, für ein erfindungsgemässes Vermessungssystem weist eine eine Anzielrichtung definierende Anzieleinheit, insbesondere Fernrohr, eine Winkelmessfunktionalität, insbesondere zur Erfassung der Ausrichtung der Anzieleinheit, und eine Kamera zur Erfassung eines Kamerabildes auf. Zusätzlich verfügt das Gerät über eine Datenbank, in der eine Zielpunktposition eines Zielpunkts und eine Kartenansicht eines den Zielpunkt aufweisenden Geländes gespeichert sind, über eine Ausgabeeinheit, insbesondere einem Display, auf der das Kamerabild und/oder die Kartenansicht darstellbar ist und über eine Steuerungs- und Verarbeitungseinheit. Zusätzlich ist eine Anzeigefunktionalität mit einer automatischen Umschaltfunktion vorgesehen, in deren Rahmen bei Ausführung der Umschaltfunktionalität gesteuert durch die Steuerungs- und Verarbeitungseinheit in Abhängigkeit eines Erfüllens eines definierten Anzeigekriteriums, insbesondere in Abhängigkeit eines Positionsverhältnis zwischen der Zielpunktposition und einer Markiereinheitsposition einer Markiereinheit, das Kamerabild oder die Kartenansicht auf einer Ausgabeeinheit angezeigt wird und ein Umschalten zwischen dem Kamerabild und der Kartenansicht automatisch erfolgt, insbesondere unter Berücksichtigung eines Distanz- und/oder Winkelschwellwerts, insbesondere wobei das Kamerabild und/oder die Kartenansicht zusammen mit der Markiereinheitsposition und/oder der Zielpunktposition angezeigt werden.

Ferner erfolgt im Rahmen eines erfindungsgemässen geodätischen Absteckverfahrens zum Abstecken eines in einem Koordinatensystem bekannten Zielpunkts, mit einem erfindungsgemässen Vermessungssystem ein Bestimmen einer Markiereinheitsposition einer mobilen Markiereinheit, ein Erfassen eines Kamerabilds mit einer Kamera eines Vermessungsgeräts und ein Erzeugen einer Kartenansicht, insbesondere in Aufsicht, insbesondere wobei die Markiereinheitsposition, die Zielpunktposition und eine Position des Vermessungsgeräts in der Kartenansicht repräsentiert werden. Weiters wird in Abhängigkeit eines Erfüllens eines definierten Anzeigekriteriums, insbesondere in Abhängigkeit eines Positionsverhältnis zwischen der Zielpunktposition und der Markiereinheitsposition, das Kamerabild oder die Kartenansicht auf einer Ausgabeeinheit angezeigt und ein Umschalten zwischen dem Kamerabild und der Kartenansicht erfolgt automatisch, insbesondere unter Berücksichtigung eines Distanz- und/oder

Winkelschwellwerts, insbesondere wobei das Kamerabild und/oder die Kartenansicht zusammen mit der Markiereinheitsposition und/oder der Zielpunktposition angezeigt werden.

Insbesondere kann erfindungsgemäss eine einen Abstand und/oder eine Richtung von der Markiereinheitsposition zu der Zielpunktposition repräsentierende Information, insbesondere Pfeil und/oder konzentrische Kreise, im Kamerabild und/oder der Kartenansicht angezeigt werden.

Somit kann z.B. einem Vermesser eine Möglichkeit gegeben werden, automatisch eine Ansicht des Messgeländes angezeigt zu bekommen, welche hinsichtlich der Orientierung, insbesondere in Richtung des nächsten abzusteckenden Zielpunkts, eine optimierte Übersicht bieten kann. Befindet sich der Vermesser mit der Markiereinheit weit entfernt vom Zielpunkt so kann mittels der Kartensicht ein Überblick über die aktuelle Position und über abzusteckende bzw. bereits abgesteckte Zielpunkte bereitgestellt werden, anhand dessen der Vermesser eine grobe Richtung und eine grobe Distanz zum nächsten Zielpunkt ableiten kann. Bei einer derartigen Annäherung an den Zielpunkt, dass die Kartenansicht zwar noch eine Orientierung erlaubt, aber mittels des Kamerabildes eine schnellere und genauere Annäherung an den Zielpunkt angeboten werden kann, kann die Anzeige auf der Ausgabeeinheit automatisch umschalten und dem Vermesser eine detaillierte Umgebungsinformation angeboten werden. Zudem können in diesem Kamerabild - im Gegensatz zur Kartenansicht - beispielsweise reale Höhenunterschiede oder Hindernisse im Gelände dargestellt und damit vom Vermesser besser eingeschätzt werden.

Für das automatisierte Umschalten zwischen den Ansichten können unterschiedliche Entscheidungskriterien hinterlegt sein, auf deren Basis eine der beiden Ansichten - entweder Kamerabild oder Kartenansicht - eingestellt wird. Hierfür können beispielsweise Distanzschwellwerte oder Winkelschwellwerte relativ zum nächsten Zielpunkt definiert sein, bei deren Unter- oder Überschreitung ein Umschalten erfolgt.

Ferner kann das Umschalten in die Kartenansicht erfolgen, falls die Distanz zwischen einem Prisma, d.h. einem Prisma, welches an einem Vermessungsstab als Retroreflektor angeordnet ist, und dem Zielpunkts sehr gross ist bzw. falls der Zielpunkt nicht nahe an der Sichtlinie des Vermessungsgeräts (relativ grosser Winkel zwischen Sichtlinie und Zielpunkt) liegt. Zudem kann die Kartenansicht angezeigt werden, falls ein Zielpunkt in dem von der Kamera erfassten Kamerabild angezeigt werden kann, insbesondere wobei das Kamerabild fortlaufend aktualisiert wird, insbesondere wobei die Kamera ein Echtzeit-Video erfasst. Ausserdem kann auf der Ausgabeeinheit eine Informationsanzeige angezeigt werden, falls die Markiereinheit sehr nahe an dem Zielpunkt positioniert ist, insbesondere dann, wenn ein definierter minimaler Abstand zum Zielpunkt erreicht wird. Mittels der Informationsanzeige können dem Vermesser Steuerungsoptionen angeboten werden, mittels derer beispielsweise ein Speichern der Zielpunktposition veranlasst werden kann.

Die Kartenansicht kann insbesondere zur Darstellung eines Überblicks über die Abstecksituation, zur Auswahl von Zielpunkten oder zur Qualitätskontrolle, d.h. welche Zielpunkte sind bereits abgesteckt bzw. welche Zielpunkte sollen noch markiert werden, angezeigt werden. Das Kamerabild hingegen kann eine Echtzeitansicht der Abstecksituation bieten, kann dazu verwendet werden anzuzeigen ob eine Sichtverbindung zu einem ausgewählten Zielpunkt frei ist, d.h. nicht durch Hindernisse abgeschattet oder unterbrochen, oder zur Führung des Vermessers hin zum Zielpunkts.

Ferner können in der jeweiligen Ansicht dargestellte Markierungen, z.B. Kreise um den Zielpunkt, eine Information darüber bieten, in welcher Entfernung sich die Markiereinheit vom nächsten Zielpunkt befindet.

Des Weiteren können zur Unterstützung des Führens weitere Anzeigeoptionen verfügbar sein. Beispielsweise kann der Hintergrund des Kamerabilds in Abhängigkeit des Abstands zwischen Zielpunkt und Markiereinheit ausgeblichen, d.h. beispielsweise in einer erhöhen Helligkeit, dargestellt werden, wobei ein Ausbleichungsgrad mit der Annäherung der Markiereinheit an den Zielpunkt abnehmen bzw. bei einer Entfernung vom Zielpunkt zunehmen kann.

Ferner kann die Kartenansicht in Abhängigkeit der Distanz zwischen Zielpunkt und Markiereinheit farblich hinterlegt angezeigt werden. Die Distanz kann somit farblich kodiert repräsentiert werden, beispielsweise mit einer roten Hintergrundfarbe für grosse und einer grünen Farbe für kleine Distanzen. Bei einer Darstellung der Kartenansicht kann diese Kodierung z.B. eine Entscheidungsgrundlage zum Umschalten in das Kamerabild bieten. So kann die grüne Hintergrundfarbe Entfernungen anzeigen, in welchen sowohl die Markiereinheitsposition als auch der Zielpunkt im Kamerabild anzeigbar sind. Damit kann eine Umschaltempfehlung, insbesondere einem Benutzer, zum Umschalten in die Darstellung des Kamerabilds bereitgestellt werden.

Das erfindungsgemässe Vermessungssystem, das erfindungsgemässe Vermessungsgerät und das erfindungsgemässe Absteckverfahren werden nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:
- Fig. 1: eine schematische Darstellung einer Anordnung von Zielpunkten, eines Vermessungsgeräts und einer Markiereinheit;
- Fig. 2a-b: eine Ausgabeeinheit eines erfindungsgemässen Vermessungssystems mit einem Kamerabild und mit einer ersten Ausführung einer erfindungsgemässen Abweichungsanzeige in zwei Richtungen und eine in eine Ebene projizierte Übersichtsdarstellung mit symbolisiertem Vermessungsgerät, Markiereinheitsposition und Zielpunkt;
- Fig. 3a-c: eine zweite Ausführungsform der erfindungsgemässen Abweichungsanzeige des erfindungsgemässen Vermessungssystems, eine die Abstecksituation verdeutlichende Übersichtsdarstellung und eine alternative Skalierung der Anzeige;
- Fig. 4a-b: die zweite Ausführungsform der erfindungsgemässen Abweichungsanzeige des erfindungsgemässen Vermessungssystems mit einer weiteren Skalierung der Anzeige und eine die Abstecksituation verdeutlichende Übersichtsdarstellung;
- Fig. 5a-b: eine erfindungsgemässes Umschalten der Skalierung der Abweichungsanzeige;
- Fig. 6: eine weitere Ausführungsform einer erfindungsgemässen Abweichungsanzeige des erfindungsgemässen Vermessungssystems;
- Fig. 7: eine weitere Ausführungsform einer erfindungsgemässen Abweichungsanzeige des erfindungsgemässen Vermessungssystems;
- Fig. 8: ein erfindungsgemässes Umschalten zwischen einem Kamerabild und einer Kartenansicht;
- Fig. 9: zeigt ein Kamerabild seitens eines erfindungsgemässen Vermessungssystems mit einer Richtung und Distanz zu einem Zielpunkt repräsentierenden, erfindungsgemässen Orientierungshilfe in einer ersten Ausführung;
- Fig. 10: zeigt ein Kamerabild seitens eines erfindungsgemässen Vermessungssystems mit einem erfindungsgemässen Indikator zur Anzeige einer Lage einer nächsten Zielpunktposition.

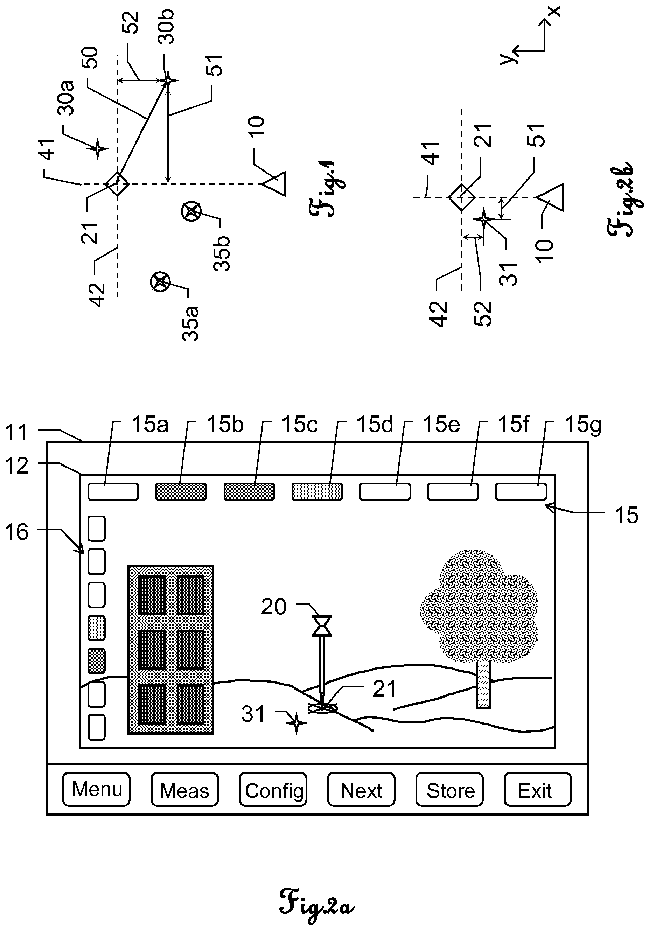

Figur 1 zeigt eine schematische Darstellung einer Anordnung von Zielpunkten 30a,30b,35a,35b, einer Position eines Vermessungsgeräts 10 und einer Markiereinheitsposition 21 einer Markiereinheit. Die Darstellung zeigt die genannten durch Symbole repräsentierten Elemente in eine Ebene projiziert. Weiters ist eine Verbindungslinie 41 zwischen dem Vermessungsgerät und der Markiereinheit gezeigt, wobei durch diese Linie 41 eine durch die Position des Vermessungsgeräts 10 und die Markiereinheitsposition 21 aufgespannte Ebene indiziert ist. Senkrecht zu der Verbindungslinie 41 verläuft eine Normale 42, deren Position durch die Markiereinheitsposition 21 definiert wird. Weiters sind die Zielpunkte 35a,35b im Rahmen eines Absteckvorgangs bereist abgesteckt bzw. markiert und im Vermessungssystem als solche gespeichert worden. Deshalb werden diese Punkte 35a,35b durch alternative Symbole gekennzeichnet.

Für ein Abstecken der beiden verbleibenden Zielpunkte 30a,30b soll die Markiereinheit (Vermessungsstab) mit deren unterem, insbesondere spitz zulaufenden, Ende nacheinander auf den Punkten 30a,30b positioniert werden. Hierzu wird der Vermessungsstab von einem Bediener des Vermessungssystems getragen und platziert. Ausgehend von einer aktuellen Position der Markiereinheit 21 muss der Bediener zum Erreichen des nächsten Zielpunkts (hier: Zielpunkt 30b) somit eine Positionsdifferenz 50 zwischen Markiereinheitsposition 21 und Zielpunktposition überwinden.

Diese Positionsdifferenz 50 kann in erfindungsgemäss zumindest zwei Anteile in jeweils eine definiert Richtung zerlegt werden. Ein Abstand 51 des Zielpunkt 30b von der Verbindungslinie 41 bzw. von der Ebene kann dabei eine Distanz zum Zielpunkt 30b (ausgehend von der Markiereinheit) in eine erste Richtung und ein Abstand 52 des Zielpunkts 30b von der Normalen 42 zur Verbindungslinie 41 eine Distanz zum Zielpunkt 30b in eine zweite Richtung angeben. Beispielsweise können die Richtungen zu denen jeweils die Distanzen angegeben werden als x- und y-Richtung bezeichnet werden, insbesondere in einem inneren Koordinatensystem.

Figur 2a zeigt eine Ausgabeeinheit 11 eines erfindungsgemässen Vermessungssystems mit einem Kamerabild 12 und mit zwei Abweichungsanzeigen 15,16 in zwei unabhängige Richtungen. Das Kamerabild 12 wird hierbei mittels einer seitens eines Vermessungsgeräts 10 bereitgestellten Kamera erfasst und fortlaufend aktualisiert. Die Kamera bzw. die Anzieleinheit des Vermessungsgeräts, welcher die Kamera zugeordnet ist, ist dabei zum Zweck einer fortlaufenden Positionsbestimmung auf einen Reflektor einer Markiereinheit 20 ausgerichtet. Ein erstes Ende der Markiereinheit 20, insbesondere ein unteres, spitz zulaufendes Ende, definiert dabei eine Markiereinheitsposition 21. Ausserdem liegt ein Zielpunkt 31 im Sichtfeld der Kamera und kann somit ebenfalls auf dem Kamerabild 12 dargestellt werden. Zwischen dem anzusteckenden Zielpunkt 31 und der Markiereinheitsposition 21 besteht eine Positionsdifferenz, welche hinsichtlich einer Markierung des Zielpunkts 31 überwunden bzw. derart verkleinert werden soll, dass der Punkt 31 innerhalb eines vordefinierten Toleranzbereichs markierbar ist. In Figur 2b ist zur Verdeutlichung der Positionsverhältnisse eine Übersichtsdarstellung mit symbolisiertem Vermessungsgerät 10, Markiereinheitsposition 21 und Zielpunkt 31 gezeigt, wobei die in eine Ebene projizierte Abstecksituation gemäss Figur 2a abgebildet ist. Die Positionsdifferenz wird hier zum einen in eine erste Richtung, in x-Richtung, durch einen Abstand 51 des Zielpunkts 31 zu einer Verbindungslinie 41 zwischen Vermessungsgerät 10 und Markiereinheitsposition 21 angezeigt. Zum anderen zeigt der Abstand 52 zwischen dem Zielpunkt 31 und der Normalen 42 zur Verbindungslinie 41 eine Positionsdifferenz in eine zweite Richtung, y-Richtung, an. Ein Bediener des erfindungsgemässen Vermessungsgeräts muss demnach mit dem Vermessungsstab 20 den Abstand 51 in x-Richtung und den Abstand 52 in y-Richtung überwinden, um eine Übereinstimmung von Zielpunktposition und Markiereinheitsposition 21 zu erreichen.

Hierfür werden im Kamerabild 12 der Ausgabeeinheit 11 die Abweichungsanzeigen 15,16 angezeigt. Dies bestehen in der vorliegenden Ausführungsform aus virtuellen Leuchtdioden. Beispielsweise weist die Abweichungsanzeige 15 Leichtdioden 15a-g auf, wobei je nach Distanz und Richtung zwischen Zielpunkt 31 und Markiereinheit 20 eine Anzahl von Dioden 15a-g aufleuchtet. Die Anzeige 15 indiziert die Positionsabweichung in x-Richtung und die Anzeige 16 die Abweichung in y-Richtung. Seitens der Abweichungsanzeige 15 leuchten die Dioden 15b,15c,15d, wobei ein alleiniges Aufleuchten der LED 15d, beispielsweise in grüner Farbe, das Erreichen der Zielpunktposition anzeigt. Durch das Aufleuchten der Dioden 15b,15c wird angezeigt, dass sich die Zielpunktposition relativ zur aktuellen Markiereinheitsposition 21 in x-Richtung nach links (ausgehend von der Blickrichtung des Vermessungsgeräts 10 in Richtung Markiereinheit 20) befindet. Analog dazu zeigt die Anzeige 16 an, dass der Zielpunkt 31 gleichzeitig in y-Richtung nach unten liegt. Die Distanz zwischen den Positionen in die jeweilige Richtung wird dabei durch ein farblich kodiertes Aufleuchten und/oder durch das Aufleuchten einer die Distanz repräsentierende Anzahl von LEDs indiziert.

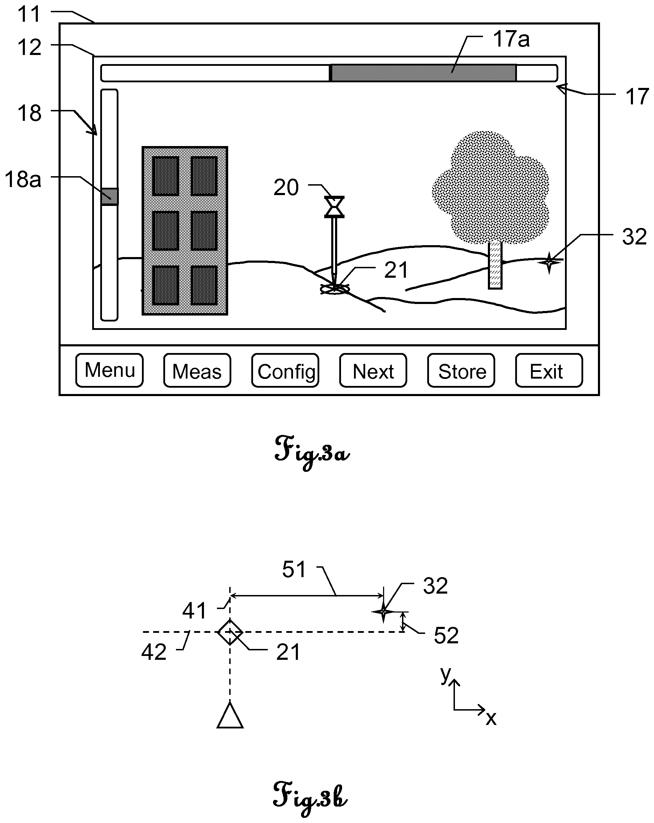

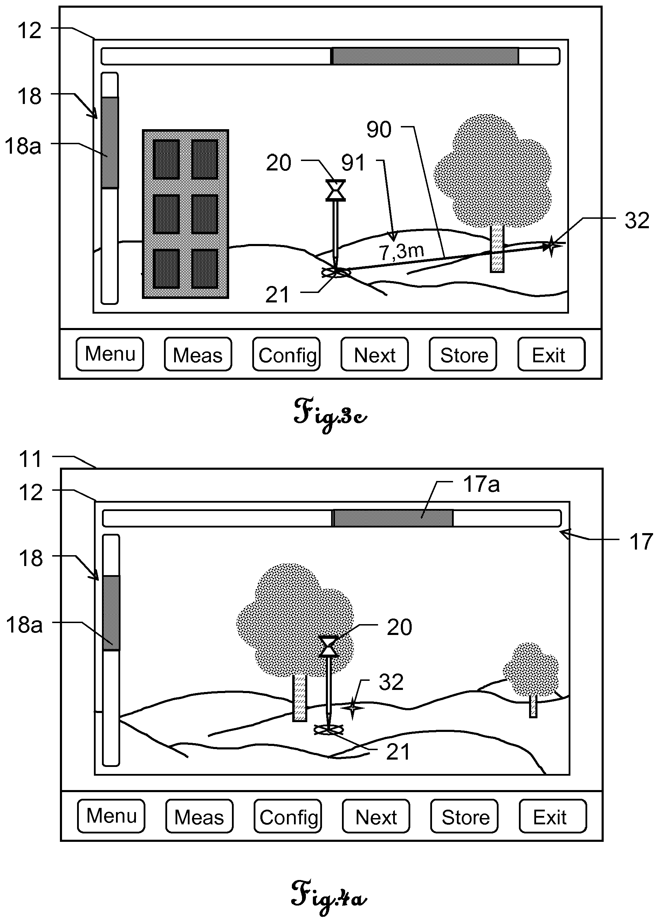

Figur 3a zeigt eine zweite Ausführungsform der erfindungsgemässen Abweichungsanzeige 17,18 des erfindungsgemässen Vermessungssystems. In einem Kamerabild 12 auf einem Display 11 des Vermessungssystems ist wiederum eine eine Markiereinheitsposition 21 definierende Markiereinheit 20 und ein Zielpunkt 32 erfasst bzw. angezeigt. Zur Verdeutlichung der Positionsdifferenz ist in Figur 3b eine die Abstecksituation gemäss Figur 3a verdeutlichende, zweidimensionale Übersichtsdarstellung gezeigt. Erfindungsgemäss werden hierbei die Abstände 51,52 zwischen dem Zielpunkt 32 und der Verbindungslinie 41 bzw. der Normalen 42 zur Verbindungslinie 42 in x- und y-Richtung mittels zweier Abweichungsanzeige 17,18, welche jeweils in Form eines Balkens ausgeführt sind, angezeigt. Jeder Balken 17,18 repräsentiert dabei eine der Richtungen (x- oder y-Richtung) der Positionsdifferenz zwischen Markiereinheitsposition 21 und Zielpunktposition. Mittels Füllungen 17a,18a der Balken 17,18 wird hierbei die jeweilige Distanz in die jeweilige Richtung indiziert. Der Füllgrad der Balken 17,18 kann korrespondierend zu einem fortlaufenden Vergleich von Zielpunktposition und Markiereinheitsposition 21 aktualisiert werden, insbesondere wobei der Füllgrad im Wesentlichen stufenlos aktualisiert wird. Zudem kann die Skalierung der Abweichungsanzeigen verändert werden, wobei die Skalierung für den Balken 17 unabhängig von der Skalierung des Balkens 18 eingestellt werden kann. Eine veränderte Skalierung bei gleich bleibender Absteckbedingung wird in Figur 3c gezeigt. Die Entfernungen zwischen der Markiereinheitsposition 21 und dem Zielpunkt 32 sind dabei identisch mit denjenigen aus Figur 3a, jedoch ist für die Anzeige der Positionsdifferenz in y-Richtung eine andere Skalierung gewählt. Die Füllung 18a des Balkens 18 ist durch die Skalierungsänderung angestiegen, d.h. mit der nun gewählten Skalierung kann eine Distanzänderung feiner angezeigt werden bzw. die Skalierung ist auf ein sensitiveres Niveau eingestellt. Demnach können mit dieser Einstellung Änderungen der Distanz 52 genauer indiziert werden, wobei ein Wert für eine maximal indizierbare Distanz kleiner gewählt ist.

Ausserdem wird in Figur 3c im Kamerabild 12 ein Pfeil 90 von der Position der Markiereinheit 20 zum Zielpunkt 32 angezeigt, der eine Distanz und Richtung von der Markiereinheitsposition 21 zum Zielpunkt 32 anzeigt. Die Distanz wird dabei durch die Länge des Pfeils 90 indiziert und zudem mittels einer Beschriftung 91 des Pfeils 90 mit einem Distanzwert bereitgestellt. Sowohl die Länge und Richtung des Pfeils 90 als auch die Beschriftung 91 können in Abhängigkeit der jeweiligen Positionsdifferenz fortlaufend aktualisiert werden.

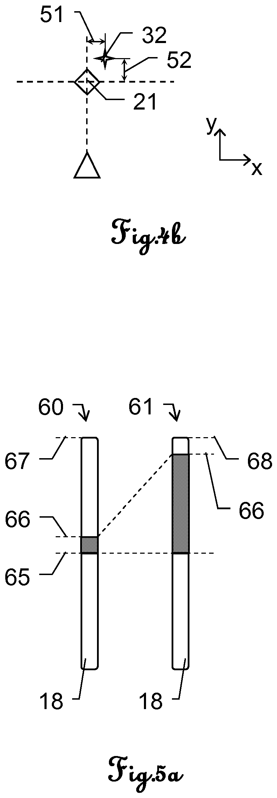

Figur 4a zeigt die zweite Ausführungsform der erfindungsgemässen Abweichungsanzeige 17,18 mit einer alternativen Skalierung der Anzeige, wobei Figur 4b wiederum eine die Abstecksituation verdeutlichende Übersichtsdarstellung zeigt. Gezeigt ist ausserdem der Zielpunkt 32 gemäss Figuren 3a,3b, wobei die Markiereinheit 20 bzw. die Mariereinheitsposition 21 eine geringer Entfernung zum Zielpunkt 32 aufweist bzw. - die Entfernung zerlegt in x- und y-Richtung - eine deutlich geringer Distanz 51 in x-Richtung aufweist. Als Abweichungsanzeige dienen wiederum die Balken 17,18 im Kamerabild 12 auf der Ausgabeeinheit 11. Mit der hier dargestellten Annäherung des Markiereinheit 20 zum Zielpunkt 32 ist die Skalierung der Abweichungsanzeigen 17,18 derart angepasst worden, dass auch bei den nun vorliegenden geringen Distanzen 51,52, die geeignet angezeigt werden sollen, eine Annäherung oder eine Entfernung vom Zielpunkt 32 mittels einer Änderung des Füllgrads der Balken 17,18 verdeutlicht werden kann. Die Skalierung des Balkens 17 wurde derart sensitiviert, dass eine maximale Füllung 17a des Balkens 17 jetzt eine geringere Abweichung der Istposition (Markiereinheit 20) von der Sollposition (Zielpunkt 32) repräsentiert verglichen mit der Messsituation gemäss Figuren 3a,3b. Zusätzlich wurde die Skalierung des Balkens 18 verändert, ohne dass eine weitgehende Distanzänderung bezüglich der y-Richtung erreicht wurde. Auch hier ist aus Gründen der Benutzerfreundlichkeit eine sensitivere Einstellung bereitgestellt, damit auch schon bei kleinen Veränderungen der Positionsabweichung in diese Richtung eine Veränderung der Füllung 18a des Balkens 18 erkennbar wird.

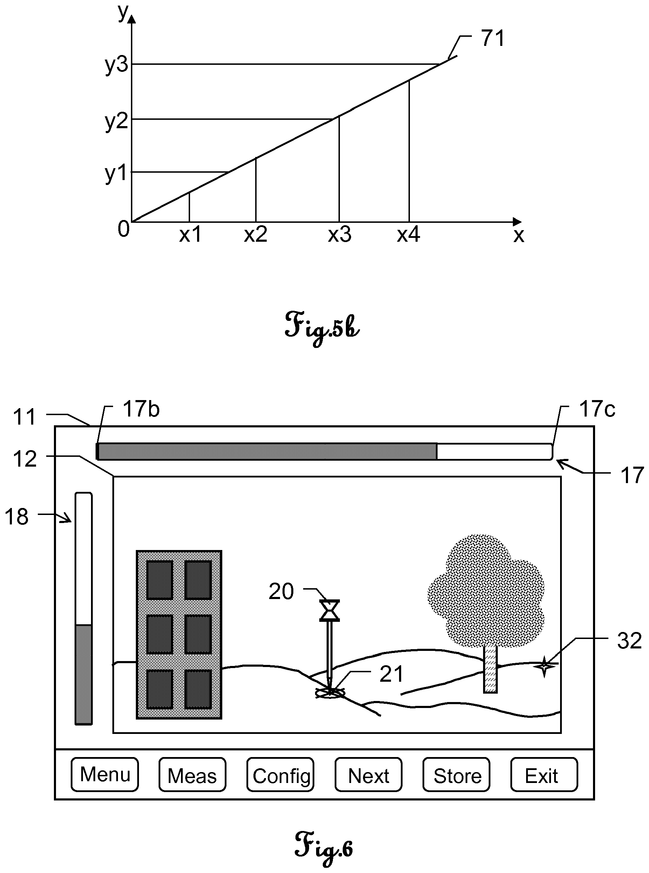

Die Figuren 5a,5b zeigen ein erfindungsgemässes Umschalten der Skalierung der Abweichungsanzeige des erfindungsgemässen Vermessungssystems. Figur 5a zeigt zwei unterschiedliche Skalierungen 60,61 einer als Balken 18 ausgeführten Abweichungsanzeige. Eine erste Position 65 auf dem Balken 65 repräsentiert dabei eine Distanz zwischen Markiereinheitsposition und Zielpunktposition von "null", d.h. Markiereinheitsposition und Zielpunktposition stimmen überein. Der Füllstand des Balkens 18 bei der Position 66 repräsentiert die aktuell vorliegende Distanz zwischen den Punkten, wobei bei der Skalierung 60 ein relativ kleiner Bereich des Balkens gefüllt ist und bei Skalierung 61 dieser Füllbereich im Verhältnis dazu gross ist. Diese unterschiedlichen Anzeigen resultieren aus den jeweils gewählten maximal repräsentierbaren Distanzen der jeweiligen Skalierung 60,61. Folglich ist für die Skalierung 60 ein höherer maximal anzeigbarer Distanzwert definiert als bei Skalierung 61. Eine Füllung des Balkens 18 bis zu einem Ende, d.h. bis zu Position 67 oder 68, würde bedeuten, dass die Distanz zwischen der Markiereinheitsposition und Zielpunktposition mindestens den jeweils definierten maximalen Wert aufweist. Um also Positionsveränderungen der Markiereinheit deutlicher erkennbar zu machen bietet die Skalierung 61 eine geeignete, sensitivere Einstellung.

Ein Umschalten zwischen unterschiedlichen Skalierungen kann mittels Figur 5b beschrieben werden. Die x- bzw. y-Achse repräsentiert dabei jeweils einen Abstand zwischen der Markiereinheitsposition und der Zielpunktposition in die jeweilige Richtung. Für jede Abweichungsrichtung sind zudem Distanzwerte x1,x2,x3,x4,y1,y2,y3 definiert, die wiederum eine geeignete Skalierungsbereiche für die Abweichungsanzeige definieren. Die Kurve 71 zeigt einen Abstandsverlauf zu einem Annähern bzw. Entfernen der Markiereinheitsposition auf direktem Wege an bzw. von der Zielpunktposition. Wird bei einer Annäherung beispielsweise eine Distanz in x-Richtung mit dem Wert x3 unterschritten kann die Abweichungsanzeige automatisch von einem Skalierungsbereich, welcher bisher Distanzen zumindest zwischen den Werten x3 und x4 abgebildet hat, in den nächst sensitiveren Skalierungsbereich mit abzubildenden Distanzen zwischen x2 und x3 umschalten. Insbesondere kann ein Umschalten in einen sensitiveren bzw. gröberen Bereich schon vor dem Erreichen eines noch abbildbaren Distanzwerts erfolgen, damit eine Repräsentation der Distanz nicht sprunghaft von einem Minimal- zu einem Maximalwert (oder umgekehrt) umspringt.

Figur 6 zeigt eine weitere Ausführungsform der erfindungsgemässen Abweichungsanzeige 17,18 des erfindungsgemässen Vermessungssystems. Auf einem Kamerabild 12 ist eine Markiereinheit 20 erfasst und die zugehörige Markiereinheitsposition 21 und eine Zielpunktposition 32 sind dargestellt. Das Kamerabild 12 wird auf einer Ausgabeeinheit 11, insbesondere auf einem Display, dargestellt. Ferner werden auf der Ausgabeeinheit 11 die Abweichungsanzeigen 17,18 als Balken angezeigt. Der Balken 17 repräsentiert dabei eine Abweichung der Markiereinheitsposition 21 von der Zielpunktposition in eine x-Richtung (vom Vermessungsgerät aus gesehen eine Abweichung nach rechts), wobei eine erstes Ende 17b des Balkens 17 (hier dargestellt: das linke Ende des Balkens) eine Übereinstimmung der Positionen angeben kann. Verändert sich der die relative Lage der Zielpunktposition zur Position der Markiereinheit derart, dass eine Positionsabweichung nach links dargestellt werden muss, so würde das zweite Ende 17c des Balkens 17 eine Positionsübereinstimmung darstellen können und eine Distanz in x-Richtung nach links durch einen Ausschlag des Balkens 17 ausgehend vom zweiten Ende 17c in Richtung des ersten Endes 17b erfolgen. Eine Darstellung der Positionsabweichung in eine zweite Richtung, in y-Richtung, kann analog mittels des Balkens 18 erfolgen.

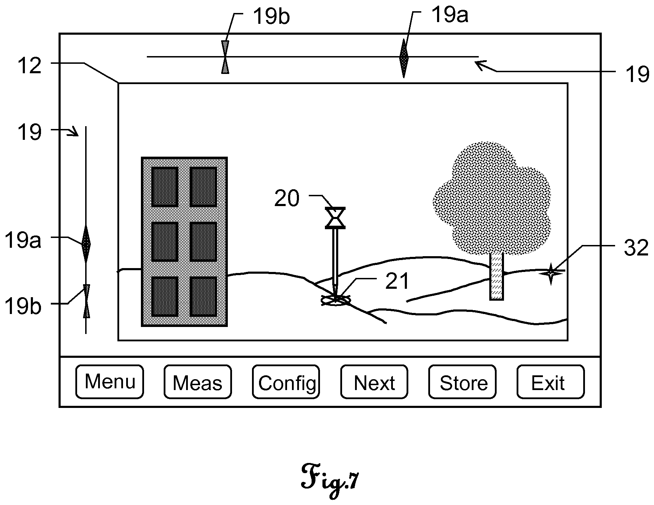

Figur 7 zeigt eine weitere Ausführungsform der erfindungsgemässen Abweichungsanzeige 19 des erfindungsgemässen Vermessungssystems. Auf dem Kamerabild 12 sind wiederum eine Markiereinheit 20 erfasst und die zugehörige Markiereinheitsposition 21 sowie eine Markierung eines Zielpunkts 32 dargestellt. Die Abweichungsanzeige 19 ist in dieser Ausführungsform jeweils verkörpert durch Symbole 19a,19b, wobei das Symbol 19a jeweils ein Referenzsymbol darstellt, welches die Zielpunktposition 32 (in der jeweiligen Richtung) repräsentiert. Das Symbol 19b stellt in diesem Zusammenhang ein Positionssymbol dar, welches die aktuelle Markiereinheitsposition 21 anzeigt. Je nach Ausgestaltung der Abweichungsanzeige 19 kann der Abstand zwischen den Symbolen 19a und 19b durch eine Bewegung beider Symbole 19a,19b oder durch ein Positionsänderung (auf dem Display) nur des Positions 19b- oder Referenzsymbols 19a erfolgen. Bewegt sich ein Vermesser mit der Markiereinheit 20 also in Richtung des Zielpunkts 32, nimmt der dargestellte Abstand zwischen Referenzsymbol 19a und Positionssymbol 19b (zumindest solange eine aktuelle Skalierung der Anzeige beibehalten wird) ab. Werden Markiereinheitsposition 21 und Zielpunktposition in Übereinstimmung gebracht, so überdecken sich die Symbole 19a,19b und zeigen dem Benutzer damit das Erreichen des Zielpunkts 32 an. Zusätzlich können in dem Kamerabild 12 numerische Absteckdifferenzen angezeigt und fortlaufend - in Abhängigkeit der relativen Positionierung der Markiereinheit zum Zielpunkt - aktualisiert werden.

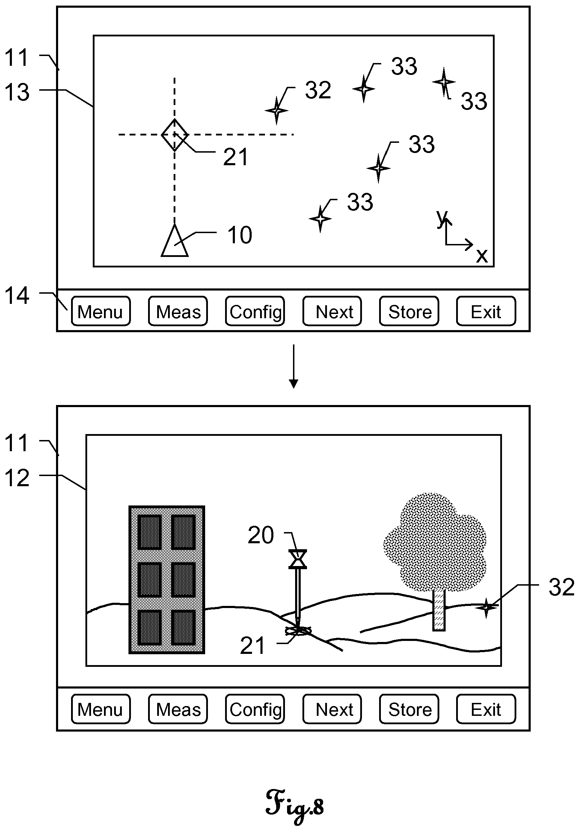

Figur 8 zeigt ein erfindungsgemässes Umschalten von einer Kartenansicht 13 zu einem Kamerabild 12 auf einer Ausgabeeinheit 11 eines erfindungsgemässen Vermessungssystems. In der Kartenansicht ist die Position des Vermessungsgeräts 10 dargestellt seitens dessen ein Positionsbestimmen der Markiereinheit 20, d.h. der Markiereinheitsposition 21, und ein Erfassen des Kamerabilds 12 mit einer Kamera erfolgt. Zusätzlich sind ein nächster Zielpunkt 32, d.h. der Zielpunkt, der abgesteckt werden soll, und weitere abzusteckende Zielpunkts 33 angezeigt. Mittels der Kartensicht 13 kann eine Orientierung hinsichtlich Richtung und Distanz zum nächsten Zielpunkt 32 auch dann erfolgen, wenn der Zielpunkt 32 derart weit von der Markiereinheitsposition 21 entfernt ist, dass dieser nicht in einem aktuell erfassbaren Kamerabild 12 darstellbar ist. Ausserdem bietet diese Ansicht einem Bediener des Systems einen Überblick darüber, welche Punkte 32,33 noch zu abzustecken sind und in welcher relativen Lage diese Punkte sich zueinander befinden. Mittels einer Benutzerschnittstelle 14 können Steuerungsbefehle beispielsweise dafür eingegeben werden, um den nächsten Zielpunkt 32 auszuwählen oder eine Position eines Zielpunkts 32,33 zu speichern.

In der angezeigten Kartenansicht 13 kann ein Vermesser sich mit dem Vermessungsstab demnach grob dem nächsten Zielpunkt 32 nähern. In der dargestellten Ausführung wird automatisch in die Darstellung des Kamerabilds 12 auf der Ausgabeeinheit 11 umgestellt sobald der nächste Zielpunkt 32 im Kamerabild 12 angezeigt werden kann. Somit kann dem Vermesser eine geeignete Ansicht zur Einschätzung einer Positionsdifferenz zwischen der Markiereinheitsposition 21 und dem nächsten Zielpunkt 32 bereitgestellt werden. Aus der Kamerabild 12 können weiters beispielsweise Geländegegebenheiten ersichtlich sein, welche in der Darstellung der schematischen Kartenansicht 13 nicht berücksichtigt sind, insbesondere Hindernisse, Senken und/oder Erhebungen. Bei Darstellung des Kamerabilds 12 kann die Markiereinheit 20 nun in Richtung des nächsten Zielpunkts32 geführt werden, wobei z.B. der Vermesser einen Weg hin zum Zielpunkt 32 unter Berücksichtigung der realen Geländeformation wählen kann. Insbesondere durch eine fortlaufende Aktualisierung des Kamerabilds 12 kann der Vermesser wiederholt seine Bewegung neu ersichtlichen Geländegegebenheiten anpassen.

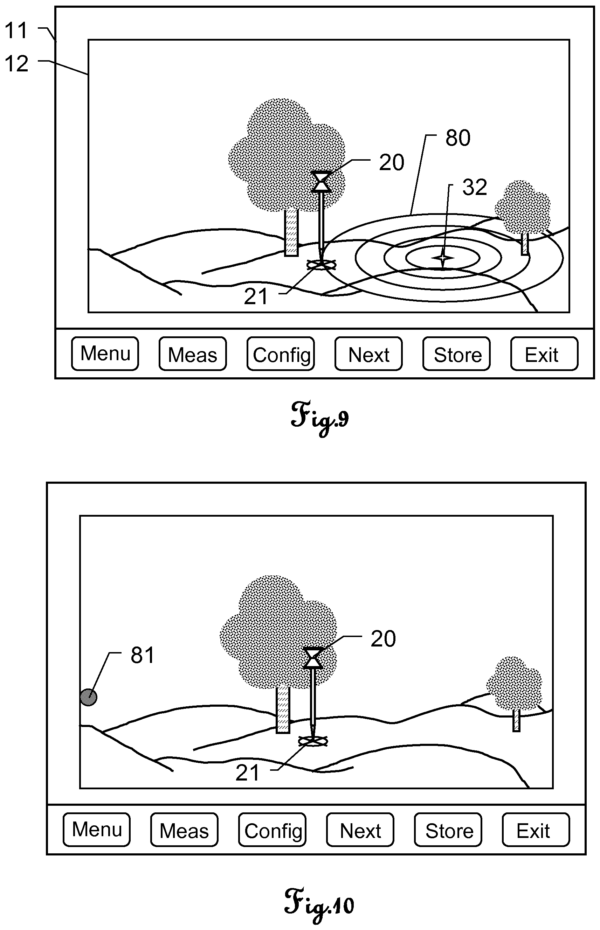

Insbesondere kann das Umschalten auch in umgekehrter Richtung vom Kamerabild 12 zur Kartenansicht 13 erfolgen. Figur 9 zeigt ein Kamerabild 12 auf einer Ausgabeeinheit 11 eines erfindungsgemässen Vermessungssystems mit einer eine Markiereinheitsposition 21 definierende Markiereinheit 20 und einem nächsten Zielpunkt 32. Zudem sind konzentrische Kreise 80 (perspektivisch dargestellt) um den Zielpunkt 32angezeigt, wobei jeder Kreis 80 einen definierten Abstand zum Zielpunkt 32 repräsentiert. Der Radius des äussersten Kreises 80 ist dabei derart gewählt, dass dieser die Markiereinheitsposition 21 schneidet und somit eine Information darüber bereitstellt, in welcher Entfernung die Markiereinheit 20 vom Zielpunkt 32 aktuell positioniert ist. Die Kreise 80 können hierfür jeweils mit einer Information bezüglich ihres Radius beschriftet sein. Einem Benutzer des Vermessungssystems kann somit anhand der Kreise 80 eine Information hinsichtlich der verbleibenden Distanz zum Zielpunkt 32 und der Richtung bereitgestellt werden. Fernern können die Radien und/oder Anzahl der Kreise 80 in Anhängigkeit des Abstands zwischen Markiereinheit 20 und Zielpunkt 32 ab- bzw. zunehmen.

Figur 10 zeigt ein Kamerabild 12 seitens eines erfindungsgemässen Vermessungssystems mit einem erfindungsgemässen Indikator 81 zur Anzeige einer Lage einer nächsten Zielpunktposition. Im Kamerabild 12 ist wiederum die Markiereinheit 20 mit der Markiereinheitsposition 21 dargestellt. Der nächste Zielpunkt liegt dabei ausserhalb des Sichtfeldes der das Kamerabild 12 erfassenden Kamera. Hierbei wird im Bild 12 ein Indikator 81 angezeigt, welcher eine Richtung anzeigt, in der der nächste Zielpunkt relativ zur Markiereinheit 20 liegt. Insbesondere kann der Indikator 81 mit einer Distanzangabe versehen sein, um zusätzlich die Entfernung zu dem Zielpunkt anzugeben. Beispielsweise kann mittels einer farblichen Gestaltung, mittels der Grösse und/oder durch ein Blinken, insbesondere in einer veränderlichen Frequenz, des Indikators 81 eine Repräsentation der Entfernung zum Zielpunkt erfolgen.

Es versteht sich, dass diese dargestellten Figuren nur mögliche Ausführungsbeispiele schematisch darstellen. Die verschiedenen Ansätze können erfindungsgemäss ebenso miteinander sowie mit Verfahren und Vorrichtungen zur Absteckung von Zielpunkten und mit Vermessungsgeräten des Stands der Technik kombiniert werden.

## Patentansprüche

1. Vermessungssystem zur Absteckung eines in einem Koordinatensystem bekannten
Zielpunkts (30a,30b,31,32,33,35a,35b), mit einer mobilen Markiereinheit (20) und einem geodätischen Vermessungsgerät (10), insbesondere zur Positionsbestimmung der Markiereinheit (20), wobei
• die Markiereinheit (20) derart ausgebildet ist, dass eine Markiereinheitsposition (21) der Markiereinheit (20) hochpräzise bestimmbar ist, insbesondere wobei die Markiereinheit (20) einen anmessbaren Reflektor und/oder eine GNSS-Antenne zur Bestimmung der Markiereinheitsposition (21) aufweist, und
• das Vermessungsgerät (10) zumindest aufweist
□ eine eine Anzielrichtung definierende Anzieleinheit, insbesondere Fernrohr,
□ eine Winkelmessfunktionalität und
□ eine Kamera zur Erfassung eines Kamerabilds (12),
sowie mit
• einer in einer Datenbank gespeicherten Zielpunktposition des Zielpunkts (30a,30b,31,32,33,35a,35b),
• einer Ausgabeeinheit (11), insbesondere einem Display, auf der das Kamerabild (12), insbesondere zusammen mit der Zielpunktposition und/oder der Markiereinheitsposition (21), darstellbar ist und
• einer Steuerungs- und Verarbeitungseinheit,
**dadurch gekennzeichnet, dass**
das Vermessungssystem eine Darstellungsfunktionalität aufweist, in deren Rahmen bei Ausführung der Darstellungsfunktionalität gesteuert durch die Steuerungs- und Verarbeitungseinheit eine räumliche Abweichung zwischen der Markiereinheitsposition (21) und der Zielpunktposition grafisch auf der Ausgabeeinheit (11)
• in eine erste Richtung mittels einer ersten Abweichungsanzeige (15,17,19), wobei die erste Abweichungsanzeige (15,17,19) eine in der ersten Richtung bemessene Entfernung zwischen der Zielpunktposition und einer durch das Vermessungsgerät (10) und die Markiereinheit (20) definierten Ebene angibt, und
• in eine zweite Richtung mittels einer zweiten Abweichungsanzeige (16,18,19), wobei die zweite Abweichungsanzeige (16,18,19) eine in der zweiten Richtung bemessene Entfernung zwischen der Zielpunktposition und einer durch die Markiereinheitsposition (21) festgelegten Normalen (42) zur Ebene angibt,
dargestellt wird, wobei die Abweichung in die erste Richtung unabhängig von der Abweichung in die zweite Richtung dargestellt wird.

2. Vermessungssystem nach Anspruch 1
**dadurch gekennzeichnet, dass**
eine Skalierung (60,61) der Darstellung der ersten und/oder der zweiten
Abweichungsanzeige (15,16,17,18,19) jeweils zwischen mindestens zwei Skalierungen (60,61) umschaltbar ist, insbesondere gemeinsam oder separat umschaltbar ist.

3. Vermessungssystem nach Anspruch 2
**dadurch gekennzeichnet, dass**
die Skalierung (60,61) manuell oder automatisch in Abhängigkeit von der räumlichen Abweichung einstellbar ist, insbesondere in Abhängigkeit von einer Distanz zwischen der Zielpunktposition und der Markiereinheitsposition (21) relativ zu einem basierend auf der Zielpunktposition definierten Distanzschwellwert und/oder in Abhängigkeit von einer Einordnung der Distanz in definierte Entfernungszonen um die Zielpunktposition, insbesondere wobei in Abhängigkeit von der räumlichen Abweichung automatisch eine Skalierungsempfehlung bereitgestellt wird, und/oder
die Skalierung (60,61) in mindestens drei Grössenordungen einstellbar ist, insbesondere wobei für die erste und/oder die zweite
Abweichungsanzeige (15,16,17,18,19) maximale räumliche Abweichungen in Grössenordungen von 10⁻³ Meter bis 10⁺³ Meter einstellbar sind.

4. Vermessungssystem nach einem der Ansprüche 1 bis 3
**dadurch gekennzeichnet, dass**
zumindest eine Abweichungsanzeige (15,16,17,18,19) als Balken (17,18), insbesondere segmentierter Balken, ausgebildet ist und/oder
zumindest eine Abweichungsanzeige (15,16,17,18,19) Symbole (19a,19b) aufweist, wobei ein Referenzsymbol (19a) die Zielpunktposition und ein Positionssymbol (19b) die Markiereinheitsposition (21) indiziert, und/oder
zumindest eine Abweichungsanzeige (15,16,17,18,19) eine Farbausprägung aufweist und/oder
zumindest eine Abweichungsanzeige (15,16,17,18,19) durch virtuelle Leuchtdioden (15,16) verkörpert ist.

5. Vermessungssystem nach einem der Ansprüche 1 bis 4
**dadurch gekennzeichnet, dass**
die erste und/oder zweite
Abweichungsanzeige (15,16,17,18,19) unabhängig vom Kamerabild (12) aktualisiert werden, insbesondere unabhängig von einem Vergrösserungsfaktor und/oder einem angezeigten Bildausschnitt des Kamerabilds (12), und/oder
zumindest eine Abweichungsanzeige (15,16,17,18,19) insbesondere eine farbliche und/oder dimensionale Gestaltung der Abweichungsanzeige (15,16,17,18,19) in Abhängigkeit der Distanz zwischen der Zielpunktposition und der Markiereinheitsposition (21) aktualisiert wird.

6. Vermessungssystem nach einem der Ansprüche 1 bis 5
**dadurch gekennzeichnet, dass**
in der Datenbank ein digitales Geländemodell gespeichert ist und die Zielpunktposition sowie insbesondere eine Kartenansicht (13) aus dem Geländemodell ableitbar ist,
und/oder
das Vermessungssystem eine Fernbedienung zur Fernsteuerung des Vermessungssystems aufweist.

7. Geodätisches Vermessungsgerät (10), insbesondere Totalstation oder Theodolit, für ein Vermessungssystem nach einem der Ansprüche 1 bis 6 mit
• einer eine Anzielrichtung definierenden Anzieleinheit, insbesondere Fernrohr,
• eine Winkelmessfunktionalität, insbesondere zur Erfassung der Ausrichtung der Anzieleinheit,
• einer Kamera zur Erfassung eines Kamerabildes (12),
• einer in einer Datenbank gespeicherten Zielpunktposition eines Zielpunkts (30a,30b,31,32,33,35a,35b),
• einer Ausgabeeinheit (11), insbesondere einem Display, auf der das Kamerabild (12) darstellbar ist und
• einer Steuerungs- und Verarbeitungseinheit
**dadurch gekennzeichnet, dass**
das Vermessungsgerät (10) eine Darstellungsfunktionalität aufweist, in deren Rahmen bei Ausführung der Darstellungsfunktionalität gesteuert durch die Steuerungs- und Verarbeitungseinheit eine räumliche Abweichung zwischen einer Markiereinheitsposition (21) einer mobilen Markiereinheit (20) und der Zielpunktposition grafisch auf der Ausgabeeinheit
• in eine erste Richtung mittels einer ersten Abweichungsanzeige (15,17,19), wobei die erste Abweichungsanzeige (15,17,19) eine in der ersten Richtung bemessene Entfernung zwischen der Zielpunktposition und einer durch das Vermessungsgerät (10) und die Markiereinheit (20) definierten Ebene angibt, und
• in eine zweite Richtung mittels einer zweiten Abweichungsanzeige (16,18,19), wobei die zweite Abweichungsanzeige (16,18,19) eine in der zweiten Richtung bemessene Entfernung zwischen der Zielpunktposition und einer durch die Markiereinheitsposition (21) festgelegten Normalen (42) zur Ebene angibt,
dargestellt wird, wobei die Abweichung in die erste Richtung unabhängig von der Abweichung in die zweite Richtung dargestellt wird, insbesondere wobei eine Skalierung der Darstellung der ersten und der zweiten Abweichungsanzeige (15,16,17,18,19) jeweils zwischen mindestens zwei Skalierungen (60,61) umschaltbar ist, insbesondere unabhängig voneinander.

8. Geodätisches Absteckverfahren zum Abstecken eines in einem Koordinatensystem bekannten
Zielpunkts (30a,30b,31,32,33,35a,35b), mit einem Vermessungssystem nach einem der Ansprüche 1 bis 6 mit
• Bestimmen einer Markiereinheitsposition (21) einer mobilen Markiereinheit (20),
• Erfassen eines Kamerabilds (12) mit einer Kamera eines Vermessungsgeräts, und
• Darstellen des Kamerabilds (12) auf einer Ausgabeeinheit (11), insbesondere zusammen mit der Markiereinheitsposition (21) und/oder der Zielpunktposition,
**dadurch gekennzeichnet, dass**
ein räumliches Abweichen zwischen der Markiereinheitsposition (21) und der Zielpunktposition grafisch auf der Ausgabeeinheit (11)
• in eine erste Richtung mittels einer ersten Abweichungsanzeige (15,17,19), wobei die erste Abweichungsanzeige (15,17,19) eine in der ersten Richtung bemessene Entfernung zwischen der Zielpunktposition und einer durch das Vermessungsgerät (10) und die Markiereinheit (20) definierten Ebene angibt, und
• in eine zweite Richtung mittels einer zweiten Abweichungsanzeige (16,18,19), wobei die zweite Abweichungsanzeige (16,18,19) eine in der zweiten Richtung bemessene Entfernung zwischen der Zielpunktposition und einer durch die Markiereinheitsposition (21) festgelegten Normalen (42) zur Ebene angibt,
dargestellt wird, wobei das Abweichen in die erste Richtung unabhängig von dem Abweichen in die zweite Richtung dargestellt wird.

9. Geodätisches Absteckverfahren nach Anspruch 8
**dadurch gekennzeichnet, dass**
ein Skalieren des Darstellens der ersten und der zweiten Abweichungsanzeige (15,16,17,18,19) jeweils in einer von mindestens zwei Skalierungen (60,61) erfolgt, insbesondere gemeinsam oder separat erfolgt.

10. Geodätisches Absteckverfahren nach Anspruch 8 oder 9
**dadurch gekennzeichnet, dass**
das Skalieren manuell oder automatisch in Abhängigkeit des räumlichen Abweichens erfolgt, insbesondere in Abhängigkeit von einer Distanz zwischen der Zielpunktposition und der Markiereinheitsposition (21) relativ zu einem basierend auf der Zielpunktposition definierten Distanzschwellwert und/oder in Abhängigkeit von einer Einordnung der Distanz in definierte Entfernungszonen um die Zielpunktposition, insbesondere wobei in Abhängigkeit des räumlichen Abweichens automatisch eine Skalierungsempfehlung bereitgestellt wird.

11. Geodätisches Absteckverfahren nach einem der Ansprüche 8 bis 10
**dadurch gekennzeichnet, dass**
zumindest eine Abweichungsanzeige (15,16,17,18,19) als Balken (17,18), insbesondere segmentierter Balken, ausgebildet ist, und/oder
zumindest eine Abweichungsanzeige (15,16,17,18,19) Symbole (19a,19b) aufweist, wobei ein
Referenzsymbol (19a) die Zielpunktposition und ein Positionssymbol (19b) die Markiereinheitsposition (21) indiziert, und/oder
zumindest eine Abweichungsanzeige (15,16,17,18,19) eine Farbausprägung aufweist, und/oder
zumindest eine Abweichungsanzeige (15,16,17,18,19) durch virtuelle Leuchtdioden (15,16) verkörpert wird.

12. Computerprogrammprodukt mit Programmcode, der auf einem maschinenlesbaren Träger gespeichert ist, zur Durchführung eines Absteckverfahrens zum Abstecken eines in einem Koordinatensystem bekannten Zielpunkts (30a,30b,31,32,33,35a,35b) nach einem der Ansprüche 8 bis 11, insbesondere wenn das Programm auf einer als Steuerungs- und Verarbeitungseinheit eines Vermessungssystem nach einem der Ansprüche 1 bis 6 ausgebildeten elektronischen Datenverarbeitungseinheit ausgeführt wird.

## Claims

1. A surveying system for marking a target (30a, 30b, 31, 32, 33, 35a, 35b) that is known in a coordinate system, having a mobile marking unit (20) and a geodetic surveying appliance (10), particularly for determining the position of the marking unit (20),
wherein
• the marking unit (20) is configured such that a marking unit position (21) for the marking unit (20) can be determined with high precision, particularly wherein the marking unit (20) has a measurable reflector and/or a GNSS antenna for determining the marking unit position (21), and
• the surveying appliance (10) at least has
▪ a targeting unit that defines a targeting direction, particularly a telescope,
▪ an angle measuring functionality and
▪ a camera for capturing a camera image (12),
and also having
• a target position - stored in a database - for the target (30a, 30b, 31, 32, 33, 35a, 35b),
• an output unit (11), particularly a display, on which the camera image (12), particularly together with the target position and/or the marking unit position (21), can be presented and
• a control and processing unit,
**characterized in that**
the surveying system has a presentation functionality that, when the presentation functionality is executed under the control of the control and processing unit, involves a spatial discrepancy between the marking unit position (21) and the target position being graphically presented on the output unit (11)
• in a first direction by means of a first discrepancy indicator (15, 17, 19), wherein the first discrepancy indicator (15, 17, 19) indicates a distance along the first direction between the target position and a plane defined by the surveying appliance (10) and the marking unit (20), and
• in a second direction by means of a second discrepancy indicator (16, 18, 19), wherein the second discrepancy indicator (16, 18, 19) indicates a distance along the second direction between the target position and a normal (42) to the plane, which normal is stipulated by the marking unit position (21),
wherein the discrepancy in the first direction is presented independently of the discrepancy in the second direction.

2. The surveying system as claimed in claim 1,
**characterized in that**
a scaling (60, 61) for the presentation of the first and/or the second discrepancy indicator (15, 16, 17, 18, 19) can be changed over in each case between at least two scalings (60, 61), in particular can be changed over collectively or separately.

3. The surveying system as claimed in claim 2,
**characterized in that**
the scaling (60, 61) is manually or automatically adjustable on the basis of the spatial discrepancy, in particular on the basis of a distance between the target position and the marking unit position (21) relative to a distance threshold value defined on the basis of the target position and/or on the basis of a classification of the distance into defined range zones around the target position, in particular wherein the spatial discrepancy is taken as a basis for automatically providing a scaling recommendation,
and/or
the scaling (60, 61) is adjustable in at least three orders of magnitude, in particular wherein maximum spatial discrepancies in orders of magnitude from 10⁻³ meters to 10⁺³ meters are adjustable for the first and/or the second discrepancy indicator (15, 16, 17, 18, 19).

4. The surveying system as claimed in any one of claims 1 to 3,
**characterized in that**
at least one discrepancy indicator (15, 16, 17, 18, 19) is in the form of a bar (17, 18), in particular of segmented bars, and/or
at least one discrepancy indicator (15, 16, 17, 18, 19) has symbols (19a, 19b), wherein a reference symbol (19a) indicates the target position and a position symbol (19b) indicates the marking unit position (21), and/or
at least one discrepancy indicator (15, 16, 17, 18, 19) has a color characteristic and/or
at least one discrepancy indicator (15, 16, 17, 18, 19) is embodied by virtual light-emitting diodes (15, 16).

5. The surveying system as claimed in any one of claims 1 to 4,
**characterized in that**
the first and/or second discrepancy indicator (15, 16, 17, 18, 19) are/is updated independently of the camera image (12), in particular independently of a magnification factor and/or a displayed image detail from the camera image (12), and/or
at least one discrepancy indicator (15, 16, 17, 18, 19), in particular a color and/or dimensional design of the discrepancy indicator (15, 16, 17, 18, 19), is updated on the basis of the distance between the target position and the marking unit position (21).

6. The surveying system as claimed in any one of claims 1 to 5,
**characterized in that**
the database stores a digital terrain model, and the target position and also particularly a map view (13) can be derived from the terrain model,
and/or
the surveying system has a remote control for remotely controlling the surveying system.

7. A geodetic surveying appliance (10), particularly a total station or theodolite, for a surveying system as claimed in any one of claims 1 to 6, having
• a targeting unit that defines a targeting direction, particularly a telescope,
• an angle measuring functionality, particularly for capturing the orientation of the targeting unit,
• a camera for capturing a camera image (12),
• a target position - stored in a database - for a target (30a, 30b, 31, 32, 33, 35a, 35b),
• an output unit (11), particularly a display, on which the camera image (12) can be presented, and
• a control and processing unit,
**characterized in that**
the surveying appliance (10) has a presentation functionality that, when the presentation functionality is executed under the control of the control and processing unit, involves a spatial discrepancy between a marking unit position (21) for a mobile marking unit (20) and the target position being graphically presented on the output unit,
• in a first direction by means of a first discrepancy indicator (15, 17, 19), wherein the first discrepancy indicator (15, 17, 19) indicates a distance along the first direction between the target position and a plane defined by the surveying appliance (10) and the marking unit (20), and
• in a second direction by means of a second discrepancy indicator (16, 18, 19), wherein the second discrepancy indicator (16, 18, 19) indicates a distance along the second direction between the target position and a normal (42) to the plane, which normal is stipulated by the marking unit position (21),
wherein the discrepancy in the first direction is presented independently of the discrepancy in the second direction,
in particular wherein a scaling for the presentation of the first and second discrepancy indicators (15, 16, 17, 18, 19) can be changed over in each case between at least two scalings (60, 61), in particular independently of one another.

8. A geodetic marking method for marking a target (30a, 30b, 31, 32, 33, 35a, 35b) that is known in a coordinate system, with a surveying system as claimed in any one of claims 1 to 6, involving
• determination of a marking unit position (21) for a mobile marking unit (20),
• capture of a camera image (12) using a camera of a surveying appliance, and
• presentation of the camera image (12) on an output unit (11), in particular together with the marking unit position (21) and/or the target position,
**characterized in that**
a spatial discrepancy between the marking unit position (21) and the target position is graphically presented on the output unit (11)
• in a first direction by means of a first discrepancy indicator (15, 17, 19), wherein the first discrepancy indicator (15, 17, 19) indicates a distance along the first direction between the target position and a plane defined by the surveying appliance (10) and the marking unit (20), and
• in a second direction by means of a second discrepancy indicator (16, 18, 19), wherein the second discrepancy indicator (16, 18, 19) indicates a distance along the second direction between the target position and a normal (42) to the plane, which normal is stipulated by the marking unit position (21),
wherein the discrepancy in the first direction is presented independently of the discrepancy in the second direction.

9. The geodetic marking method as claimed in claim 8,
**characterized in that**
scaling for the presentation of the first and second discrepancy indicators (15, 16, 17, 18, 19) is effected in each case in one of at least two scalings (60, 61), in particular is effected collectively or separately.

10. The geodetic marking method as claimed in claim 8 or 9,
**characterized in that**
the scaling is effected manually or automatically on the basis of the spatial discrepancy, in particular on the basis of a distance between the target position and the marking unit position (21) relative to a distance threshold value that is defined on the basis of the target position and/or on the basis of a classification of the distance into defined range zones around the target position, in particular wherein the spatial discrepancy is taken as a basis for automatically providing a scaling recommendation.

11. The geodetic marking method as claimed in any one of claims 8 to 10,
**characterized in that**
at least one discrepancy indicator (15, 16, 17, 18, 19) is in the form of a bar (17, 18), in particular of segmented bars, and/or
at least one discrepancy indicator (15, 16, 17, 18, 19) has symbols (19a, 19b), wherein a reference symbol (19a) indicates the target position and a position symbol (19b) indicates the marking unit position (21), and/or
at least one discrepancy indicator (15, 16, 17, 18, 19) has a color characteristic, and/or
at least one discrepancy indicator (15, 16, 17, 18, 19) is embodied by virtual light-emitting diodes (15, 16).

12. A computer program product having program code, which is stored on a machine-readable storage medium, for carrying out a marking method for marking a target (30a, 30b, 31, 32, 33, 35a, 35b) that is known in a coordinate system as claimed in any one of claims 8 to 11, particularly when the program is executed on an electronic data processing unit in the form of a control and processing unit for a surveying system as claimed in any one of claims 1 to 6.

## Revendications

1. Système d'arpentage pour le piquetage d'un point cible (30a, 30b, 31, 32, 33, 35a, 35b) connu dans un système de coordonnées, comprenant une unité de marquage mobile (20) et un appareil d'arpentage géodésique (10), en particulier pour déterminer la position de l'unité de marquage (20), dans lequel
• l'unité de marquage (20) est conçue de telle sorte qu'une position d'unité de marquage (21) de l'unité de marquage (20) peut être déterminée avec une haute précision, en particulier l'unité de marquage (20) comportant un réflecteur mesurable et/ou une antenne GNSS pour déterminer la position d'unité de marquage (21), et
• l'appareil d'arpentage (10) comporte au moins
▪ une unité de visée définissant une direction de visée, en particulier une lunette,
▪ une fonctionnalité de goniométrie et
▪ une caméra pour l'acquisition d'une image de caméra (12),
et comprenant en outre
• une position de point cible du point cible (30a, 30b, 31, 32, 33, 35a, 35b) enregistrée dans une base de données,
• une unité de sortie (11), en particulier un écran, sur laquelle l'image de caméra (12) peut être représentée, en particulier avec la position de point cible et/ou la position d'unité de marquage (21) et
• une unité de commande et de traitement,
**caractérisé en ce que**
le système d'arpentage comporte une fonctionnalité de représentation, dans le cadre de laquelle, lors de l'exécution de la fonctionnalité de représentation commandée par l'unité de commande et de traitement, une divergence spatiale entre la position d'unité de marquage (21) et la position de point cible est représentée graphiquement sur l'unité de sortie (11)
• dans une première direction au moyen d'un premier affichage de divergence (15, 17, 19), le premier affichage de divergence (15, 17, 19) indiquant une distance dans la première direction entre la position de point cible et un plan défini par l'appareil d'arpentage (10) et l'unité de marquage (20), et
• dans une deuxième direction au moyen d'un deuxième affichage de divergence (16, 18, 19), le deuxième affichage de divergence (16, 18, 19) indiquant une distance dans la deuxième direction entre la position de point cible et une normale (42) au plan définie par la position d'unité de marquage (21),
la divergence dans la première direction étant représentée indépendamment de la divergence dans la deuxième direction.

2. Système d'arpentage selon la revendication 1,
**caractérisé en ce que**
une mise à l'échelle (60, 61) de la représentation du premier et/ou du deuxième affichage de divergence (15, 16, 17, 18, 19) est chaque fois commutable, en particulier commutable ensemble ou séparément, entre au moins deux mises à l'échelle (60, 61).

3. Système d'arpentage selon la revendication 2,
**caractérisé en ce que**
la mise à l'échelle (60, 61) est réglable manuellement ou automatiquement en fonction de la divergence spatiale, en particulier en fonction d'une distance entre la position de point cible et la position d'unité de marquage (21) par rapport à une valeur seuil de distance définie sur la base de la position de point cible et/ou en fonction d'une classification de la distance dans des zones de distance définies autour de la position de point cible, en particulier une recommandation de mise à l'échelle étant fournie automatiquement en fonction de la divergence spatiale, et/ou la mise à l'échelle (60, 61) est réglable en au moins trois ordres de grandeur, en particulier des divergences spatiales maximales dans des ordres de grandeur de 10⁻³ mètres à 10⁺³ mètres étant réglables pour le premier et/ou le deuxième affichage de divergence (15, 16, 17, 18, 19).

4. Système d'arpentage selon l'une des revendications 1 à 3,
**caractérisé en ce que**
au moins un affichage de divergence (15, 16, 17, 18, 19) est réalisé sous la forme de barres (17, 18), en particulier de barres segmentées, et/ou
au moins un affichage de divergence (15, 16, 17, 18, 19) présente des symboles (19a, 19b), un symbole de référence (19a) indiquant la position de point cible et un symbole de position (19b) la position d'unité de marquage (21), et/ou
au moins un affichage de divergence (15, 16, 17, 18, 19) présente une coloration et/ou
au moins un affichage de divergence (15, 16, 17, 18, 19) est représenté par des diodes électroluminescentes virtuelles (15, 16).

5. Système d'arpentage selon l'une des revendications 1 à 4,
**caractérisé en ce que**
le premier et/ou le deuxième affichage de divergence (15, 16, 17, 18, 19) sont actualisés indépendamment de l'image de caméra (12), en particulier indépendamment d'un facteur d'agrandissement et/ou d'une partie d'image affichée de l'image de caméra (12), et/ou
au moins un affichage de divergence (15, 16, 17, 18, 19), en particulier une configuration chromatique et/ou dimensionnelle de l'affichage de divergence (15, 16, 17, 18, 19), est actualisé en fonction de la distance entre la position de point cible et la position d'unité de marquage (21).

6. Système d'arpentage selon l'une des revendications 1 à 5,
**caractérisé en ce que**
un modèle de terrain numérique est stocké dans la base de données et la position de point cible ainsi que, en particulier, une vue cartographique (13) peuvent être dérivées du modèle de terrain,
et/ou
le système d'arpentage comporte une télécommande pour commander à distance le système d'arpentage.

7. Appareil d'arpentage géodésique (10), en particulier station totale ou théodolite, pour un système d'arpentage selon l'une des revendications 1 à 6, comprenant
• une unité de visée définissant une direction de visée, en particulier une lunette,
• une fonctionnalité de goniométrie, en particulier pour détecter l'orientation de l'unité de visée,
• une caméra pour l'acquisition d'une image de caméra (12),
• une position de point cible d'un point cible (30a, 30b, 31, 32, 33, 35a, 35b) enregistrée dans une base de données,
• une unité de sortie (11), en particulier un écran, sur laquelle l'image de caméra (12) peut être représentée et
• une unité de commande et de traitement,
**caractérisé en ce que**
l'appareil d'arpentage (10) comporte une fonctionnalité de représentation, dans le cadre de laquelle, lors de l'exécution de la fonctionnalité de représentation commandée par l'unité de commande et de traitement, une divergence spatiale entre une position d'unité de marquage (21) d'une unité de marquage mobile (20) et la position de point cible est représentée graphiquement sur l'unité de sortie
• dans une première direction au moyen d'un premier affichage de divergence (15, 17, 19), le premier affichage de divergence (15, 17, 19) indiquant une distance dans la première direction entre la position de point cible et un plan défini par l'appareil d'arpentage (10) et l'unité de marquage (20), et
• dans une deuxième direction au moyen d'un deuxième affichage de divergence (16, 18, 19), le deuxième affichage de divergence (16, 18, 19) indiquant une distance dans la deuxième direction entre la position de point cible et une normale (42) au plan définie par la position d'unité de marquage (21),
la divergence dans la première direction étant représentée indépendamment de la divergence dans la deuxième direction, en particulier une mise à l'échelle de la représentation du premier et du deuxième affichage de divergence (15, 16, 17, 18, 19) étant chaque fois commutable, en particulier indépendamment l'une de l'autre, entre au moins deux mises à l'échelle (60, 61).

8. Procédé de piquetage géodésique pour piqueter un point cible (30a, 30b, 31, 32, 33, 35a, 35b) connu dans un système de coordonnées, comprenant un système d'arpentage selon l'une des revendications 1 à 6, consistant à
• déterminer une position d'unité de marquage (21) d'une unité de marquage mobile (20),
• acquérir une image de caméra (12) avec une caméra d'un appareil d'arpentage, et
• représenter l'image de caméra (12) sur une unité de sortie (11), en particulier avec la position d'unité de marquage (21) et/ou la position de point cible,
**caractérisé en ce que**
une divergence spatiale entre la position d'unité de marquage (21) et la position de point cible est représentée graphiquement sur l'unité de sortie (11)
• dans une première direction au moyen d'un premier affichage de divergence (15, 17, 19), le premier affichage de divergence (15, 17, 19) indiquant une distance dans la première direction entre la position de point cible et un plan défini par l'appareil d'arpentage (10) et l'unité de marquage (20), et
• dans une deuxième direction au moyen d'un deuxième affichage de divergence (16, 18, 19), le deuxième affichage de divergence (16, 18, 19) indiquant une distance dans la deuxième direction entre la position de point cible et une normale (42) au plan définie par la position d'unité de marquage (21),
la divergence dans la première direction étant représentée indépendamment de la divergence dans la deuxième direction.

9. Procédé de piquetage géodésique selon la revendication 8,
**caractérisé en ce que**
une mise à l'échelle de la représentation du premier et du deuxième affichage de divergence (15, 16, 17, 18, 19) est effectuée chaque fois, en particulier ensemble ou séparément, dans l'une d'au moins deux mises à l'échelle (60, 61).

10. Procédé de piquetage géodésique selon la revendication 8 ou 9,
**caractérisé en ce que**
la mise à l'échelle est effectuée manuellement ou automatiquement en fonction de la divergence spatiale, en particulier en fonction d'une distance entre la position de point cible et la position d'unité de marquage (21) par rapport à une valeur seuil de distance définie sur la base de la position de point cible et/ou en fonction d'une classification de la distance dans des zones de distance définies autour de la position de point cible, en particulier une recommandation de mise à l'échelle étant fournie automatiquement en fonction de la divergence spatiale.

11. Procédé de piquetage géodésique selon l'une des revendications 8 à 10,
**caractérisé en ce que**
au moins un affichage de divergence (15, 16, 17, 18, 19) est réalisé sous la forme de barres (17, 18), en particulier de barres segmentées, et/ou
au moins un affichage de divergence (15, 16, 17, 18, 19) présente des symboles (19a, 19b), un symbole de référence (19a) indiquant la position de point cible et un symbole de position (19b) la position d'unité de marquage (21), et/ou
au moins un affichage de divergence (15, 16, 17, 18, 19) présente une coloration et/ou
au moins un affichage de divergence (15, 16, 17, 18, 19) est représenté par des diodes électroluminescentes virtuelles (15, 16).

12. Produit programme d'ordinateur avec un code de programme qui est enregistré sur un support lisible par machine, pour mettre en oeuvre un procédé de piquetage pour piqueter un point cible (30a, 30b, 31, 32, 33, 35a, 35b) connu dans un système de coordonnées selon l'une des revendications 8 à 11, en particulier lorsque le programme est exécuté sur une unité électronique de traitement de données réalisée sous la forme d'une unité de commande et de traitement d'un système d'arpentage selon l'une des revendications 1 à 6.
